# EUROPEAN PATENT SPECIFICATION

(11) **EP 0 861 858 B1**
(45) Date of publication and mention of the grant of the patent: **30.06.2004**
(21) Application number: 98108152.4
(22) Date of filing: 06.07.1992
(51) Int. Cl.: C08F 246/00, C09D 157/00, C08F 220/22, C08F 230/08

(54) **Polymeric surface coatings**
Polymere Oberflächenbeschichtungszusammensetzungen
Revêtements de surfaces polymères

(30) Priority: 08.08.1991 GB 9117170; 24.04.1992 GB 9208970
(43) Date of publication of application: 02.09.1998
(62) Divisional of application: 92914110.9
(73) Proprietor: Biocompatibles UK Limited, Farnham Surrey GU9 8QL (GB)
(72) Inventor: Bowers, Roderick W. J., Norfolk, Virginia 23507 (US); Jones, Stephen Alister, Biocompatibles Ltd., Farnham, Surrey, GU9 8QL (GB); Stratford, Peter William, Biocompatibles Ltd., Farnham, Surrey, GU9 8QL (GB)
(74) Representative: Jones, Helen Marjorie Meredith

(56) References cited:
- EP-A- 0 293 963
- DE-A- 2 640 967
- US-A- 3 671 502

## Description

The present invention relates to a coating and processes for coating surfaces. The invention also provides processes for producing certain monomers and to certain monomers used to obtain the polymers. The polymers are useful for coating surfaces of devices and materials which come into contact with protein-containing solutions and biological fluids, and rendering the surfaces bio- and haemocompatible. Surfaces may thus be rendered suitable for prolonged contact with living tissues and body fluids and with protein-containing solutions.

The present application is a divisional application from earlier European patent application number 92914110.9 (WO-A-9 301 221, & CP-B-0 593 561). Two other divisional applications from that parent have also been submitted, numbers 97109889.2 (EP-A-0 818 479) and 97109890.0 (EP-A-0 810 239). The sister and parent applications relate to polymers formed from zwitterionic monomers as defined herein and comonomers different to those defined in claim 1 of this specification.

Materials used in the manufacture of separation substrates and devices, blood contacting devices contact and intraocular lenses, and other devices which are used in contact with protein-containing or biological fluids must be selected on the basis of acceptable physical and mechanical properties and compatibility with the protein-containing or biological fluid. For any given application of these materials it is usually difficult to optimise all of these considerations simultaneously and a compromise must be reached often resulting in less than optimal performance. For example, major biological problems are often encountered with materials which have otherwise optimal mechanical and physical properties. These problems often manifest themselves as undesirable deposition of biological components and in particular proteinaceous material. This protein adsorption results in blood clot formation in blood-contacting materials, the adsorption of tear components onto contact lenses resulting in deposit formation, formation of deposits on intraocular lenses and in separation media it results in blockage and failure of separation devices. Such effects lead to significant loss in operational performance and often complete rejection and failure of devices.

In the case of medical devices, for example prostheses and components of blood dialysis equipment, it is common practice to employ biocompatible polymers to form at least the surface of the devices to discourage protein adsorption. However, these materials are not perfect and reaction with the living tissues still remain a problem; for example surface-induced thrombosis is still a major difficulty, particularly where large quantities of blood are contacted with a foreign surface such as in artificial lungs and kidneys. Formation of a clot in an artificial organ has a number of adverse or even catastrophic effects including occlusion of the blood pathway in the extracorporeal system, or embolism if the clot breaks off the artificial surface and lodges in a host blood vessel. Dialysis membranes, heart valves, circulatory-assist devices, blood substitutes and artificial lungs all share this problem.

It is known that materials for use as biocompatible coatings should ideally:
(a) be capable of reproducible manufacture as pure materials;
(b) be capable of being coated onto surfaces without being degraded or adversely changed;
(c) have the requisite mechanical and permeability properties required for the specific function of the device for which they are intended;
(d) be sterilisable without adverse changes in, for example, permeability and mechanical or surface properties;
(e) not be damaged or degraded by the biological environment;
(f) not be carcinogenic.
   In applications involving direct contact with blood further restrictions exist. Materials should not:
(g) induce significant platelet adhesion;
(h) interfere with the normal clotting mechanism; or
(i) cause any significant damage to the cellular elements or soluble components of the blood.

There have been many attempts to prepare biocompatible, and specifically blood compatible (i.e. haemocompatible), surfaces, which do not activate the blood coagulation process and do not promote thrombus formation. Examples of such attempts include the preparation of negatively charged surfaces, such as by use of anionic polymers or suitable oriented electret polymers, preparation of surfaces coated with the natural anticoagulant heparin or synthetic heparin analogues, preparation of surfaces with inherently low surface free energy such as by use of silicone rubber, preparation of albumin-coated surfaces, and preparation of surfaces coated with compounds which are thought to adsorb albumin preferentially from blood. All of these however have had limitations.

We have now devised film-forming polymers which can be used to coat surfaces. It has been found that these copolymers may be used to provide stable coatings on a wide variety of surfaces including, polyethylene, PVC, steel and poly(imide). The invention also provides physiadsorbable polymers which when used to coat surfaces, do not swell, to any significant extent, in aqueous environments; in some situations swelling in aqueous environments can reduce the stability of coatings of physiadsorbable polymers on surfaces.

The polymers which contain zwitterionic groups, mimic the zwitterionic structure of phospholipids such as phosphatidylcholine and sphingomyelin which are the major components of the outer membrane of all living cells. In this way the present invention seeks to provide a biocompatible surface on a coated substrate at which the deposition of proteins and cells at the substrate is minimised when the coated substrate comes into contact with a protein-containing solution or biological fluid.

In JP-A-03-039309 self supporting membranes are made from copolymers of 2-(methacryloyloxyethyl)-2'-(trimethylammoniumethyl) phosphate inner salt and alkyl(alk)acrylates. The alkyl(alk)acrylate monomers exemplified include butyl methacrylate, 2-phenoxyethyl methacrylate and tridecyl methacrylate. The membranes are cast from a mixed methanol-tetrahydrofuran solvent mixture, in which the polymers will be fully dissolved. It is suggested that the polymers could, rather than be cast as membranes, be coated onto surfaces from the same solvents. In one of the performance tests, the same solution in methanol and tetrahydrofuran, is used to coat acrylic beads.

In EP-A-0293963 cross-linkable polymers comprising pendant fluorocarbon groups and pendant ionic groups are used to coat substrates. The polymer may comprise anionic groups, cationic groups or the two types in combination. The polymers may be used as wound dressings.

The present invention provides a coating consisting of
a) a polymer obtainable by the radical polymerisation of monomers consisting of
   i) a zwitterionic monomer of the general formula I

      Y-B-X (I)

      wherein B is a straight or branched alkylene, oxaalkylene or oligo-oxaalkylene chain optionally containing one or more fluorine atoms up to and including perfluorinated chains or, if X contains a carbon-carbon chain between B and the centre of permanent positive charge or if Y contains a terminal carbon atom bonded to B, a valence bond;
      X is a zwitterionic group and
      Y is an ethylenically unsaturated polymerisable group selected from 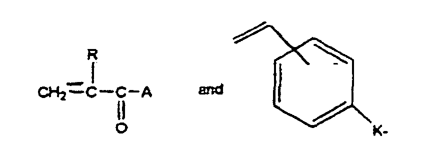 wherein:
      R is hydrogen or a C₁-C₄ alkyl group;
      A is -O- or -NR¹- wherein R¹ is hydrogen or a C₁₋C₄ alkyl group or R¹ is -B-X where B and X are as defined above; and
      K is a group -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²-, (in which the groups R² are the same or different) -(CH₂)ₚO-, -(CH₂)ₚSO₃-, or, optionally in combination with B, a valence bond and p is from 1 to 12 and R² is hydrogen or a C₁-C₄ alkyl group; and
   ii) a hydrophobic comonomer of the general formula

      Y¹-Q (VI)

      where Y¹ is an ethylenically unsaturated polymerisable group selected from 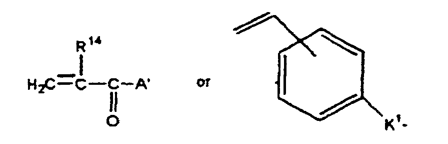 wherein R¹⁴ is hydrogen or C₁-C₄ alkyl ,
      A' is -O- or -NR¹⁵- where R¹⁵ is hydrogen or a C₁-C₄ alkyl group or R¹⁵ is a group Q;
      K¹ is a group -(CH₂)ₗOC(O)-, -(CH)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (in which the groups R¹⁶ are the same or different), -(CH₂)ₗO-, -(CH₂)ₗSO₃-, a valence bond and l is from 1 to 12 and R¹⁶ is hydrogen or a C₁-C₄ alkyl group; and
      Q is straight or branched alkyl, alkoxyalkyl or (oligo-alkoxy)alkyl chain containing 6 to 24 carbon atoms optionally containing one or more carbon-carbon double or triple bonds; and
b) a solvent consisting of alcohol in which the polymer is dispersed.

Zwitterionic groups bear a centre of permanent positive charge and a centre of negative charge. Such zwitterionic groups mimic the structure of the head groups of phospholipids in cells. Without wishing to be limited by this theory, it is thought that the presence of such groups at a surface renders the surface more biocompatible.

The extent to which a polymer renders a surface biocompatible may be assessed as a combination of factors such as reduction in the extent to which the surface causes blood platelet activation, protein adsorption, (for instance as judged by absorption of fibrinogen from human plasma) and reaction with C-reactive protein which is caused by the presence on the surface of isolated zwitterionic, e.g.) phosphate ammonium ester groups. Preferably the polymers of the invention when coated onto a substrate, provide a reduction in platelet activation of at least 70%, more preferably at least 90%, as assessed by the assay described hereinafter compared to an untreated substrate. It is also preferred that the polymers of the invention, when coated onto a substrate, provide a reduction in fibrinogen absorption of at least 60% as assessed by the assay described hereinafter and a protein index of less than 1.5 x 10³ compared to an untreated substrate. The protein index is defined as the ratio of the absorbance due to C-reactive protein measured in the assay described hereinafter to the reduction in fibrinogen adsorption.

The nature of the groups capable of binding the polymer to a surface will be selected depending upon the nature of the surface which it is intended to coat with the polymer. Where the surface is hydrophobic, the hydrophobic alkyl groups Q are capable of being physisorbed at the surface and are used to bind the polymer to the surface.

It will be understood that throughout, where a group is referred to as capable of binding a polymer to a surface this is intended to mean stably binding.

### Zwitterionic Monomers

The zwitterionic monomer includes within its structure not only a centre of permanent positive charge but also a centre of negative charge. Typically the centre of permanent positive charge is provided by quaternary nitrogen atom.

The proviso on whether B may be a valence bond ensures that the centre of permanent positive charge in X is not directly bonded to a heteroatom, such as an oxygen or nitrogen atom in Y.

Preferred monomers containing a group bearing a centre of permanent positive charge are therefore of general formula (II) or (III). 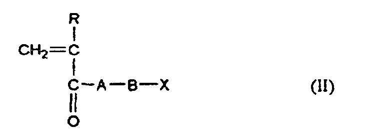 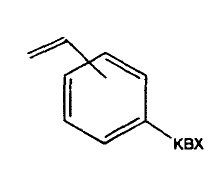 where R, A, B, K and X are as defined with reference to formula (I).

Preferably in the compounds of formula (II) R is hydrogen, methyl, or ethyl, more preferably methyl, so that (II) is an acrylic acid, methacrylic acid or ethacrylic acid derivative.

In the compounds of formula (III) K may be a valence bond and B a group, K may be a group and B a valence bond, both K and B may be groups, or K and B may together be a valence bond.

Preferably B is a group where K is a valence bond.

Where K is a group then preferably p is from 1 to 6, more preferably 1,2 or 3 and most preferably p is 1.

When K is a group -(CH₂)ₚNR²-, -(CH₂)ₚNR²C(O)-, -(CH₂)ₚC(O)NR², -(CH₂)ₚNR²C(O)O-, -(CH₂)ₚOC(O)NR²- or -(CH₂)ₚNR²C(O)NR²- then R² is preferably hydrogen, methyl or ethyl, more preferably hydrogen.

In the compounds of formula (III) preferably the vinyl group is para to the group -K-B-X.

Preferably B is:
an alkylene group of formula -(CR³₂)ₐ-, wherein the groups -(CR³₂)- are the same or different, and in each group -(CR³₂)- the groups R³ are the same or different and each group R³ is hydrogen, fluorine or C₁₋₄ alkyl or fluroalkyl, preferably hydrogen, and a is from 1 to 12, preferably 1 to 6;
an oxaalkylene group such as alkoxyalkyl having 1 to 6 carbon atoms in each alkyl moiety, more preferably -CH₂O(CH₂)₄-; or
an oligo-oxaalkylene group of formula -[(CR⁴₂)_{b}O]_{c}(CR⁴₂)_{b}- where the groups -(CR⁴₂)- are the same or different and in each group -(CR⁴₂)- the groups R⁴ are the same or different and each group R⁴ is hydrogen, fluorine or C₁₋₄ alkyl or fluoroalkyl, preferably hydrogen, and b is from 1 to 6, preferably 2 or 3 and c is from 2 to 11, preferably 2 to 5; or
if X contains a carbon-carbon chain between B and the centre of permanent positive charge or if Y contains a terminal carbon atom, a valence bond.

Preferred groups B include alkylene, oxaalkylene and oligo-oxaalkylene groups of up to 12 carbon atoms optionally containing one or more fluorine atoms. Where the polymer is not intended for coating a hydrophobic surface, and therefore is not intended to be bound by physiosorption to a surface, then preferably B is an alkylene, oxaalkylene or oligo-oxaalkylene group which does not contain any fluorine atoms.

In compounds of formula (III) it is preferred that K and B contain up to 12 carbon atoms in total.

Preferred groups X containing a centre of permanent positive charge, are the groups of formula (IVB), (IVC), (IVD), (IVE) and (IVF) as defined below. Of these groups (IVC) are particularly preferred.

The groups of formula (IVB) are: 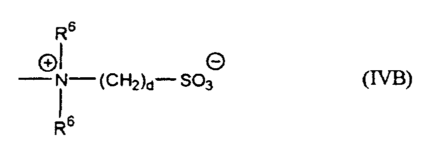 where the groups R⁶ are the same or different and each is hydrogen or C₁₋₄ alkyl and d is from 2 to 4.

Preferably groups R⁶ are the same. It is also preferable that at least one of the groups R⁶ is methyl, and more preferable that the groups R⁶ are both methyl.

Preferably d is 2 or 3, more preferably 3.

When X is a group of formula (IVB) preferably B is a group of formula -(CR³₂)- or -(CR³₂)₂ eg. -(CH₂)- or -(CH₂CH₂)-,

The groups of formula (IVC) are: 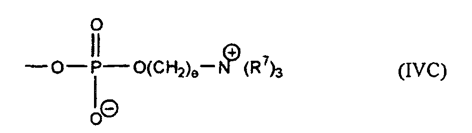 where the groups R⁷ are the same or different and each is hydrogen or C₁₋₄ alkyl, and e is from 1 to 4.

Preferably the groups R⁷ are the same. It is also preferable that at least one of the groups R⁷ is methyl, and more preferable that the groups R⁷ are all methyl.

Preferably e is 2 or 3, more preferably 2. When X is a group of formula (IVC) preferably B is a group of formula -(CR³₂)- or -(CR³₂)₂-, eg. -(CH₂)- or -(CH₂CH₂)-.

The groups of formula (IVD) are: 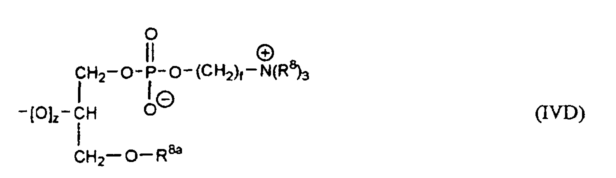 wherein the groups R⁸ are the same or different and each is hydrogen or C₁₋₄ alkyl, R^{8a} is hydrogen or, more preferably, a group -C(O)B¹R^{8b} where R^{8b} is hydrogen or methyl, preferably methyl, B¹ is a valence bond or straight or branched alkylene, oxaalkylene or oligo-oxaalkalyene group, and f is from 1 to 4; and

if B is other than a valence bond z is 1 and if B is a valence bond z is 0, if X is directly bonded to an oxygen or nitrogen atom and otherwise z is 1.

Preferably the groups R⁸ are the same. It is also preferable that at least one of the groups R⁸ is methyl, and more preferable that the groups R⁸ are all methyl.

Preferably f is 1 or 2, more preferably 2.

Preferably B¹ is:
a valence bond;
an alkylene group of formula -(CR^{3a}₂)ₐₐ-, wherein the groups -(CR^{3a}₂)- are the same or different, and in each group -(CR^{3a}₂)- the groups R^{3a} are the same or different and each group R^{3a} is hydrogen or C₁₋₄ alkyl, preferably hydrogen, and aa is from 1 to 12, preferably 1 to 6;
an oxaalkylene group such as alkoxyalkyl having 1 to 6 carbon atoms in each alkyl moiety, more preferably -CH₂O(CH₂)₄-; or
an oligo-oxaalkylene group of formula -[(CR^{4a}₂)_{ba}O]_{ca}- where the groups -(CR^{4a}₂)- are the same or different and in each group -(CR^{4a}₂)- the groups R^{4a} are the same or different and each group R^{4a} is hydrogen or C₁₋₄ alkyl, preferably hydrogen, and ba is from 1 to 6, preferably 2 or 3, and ca is from 1 to 12, preferably 1 to 6.

Preferred groups B¹ include a valence bond and alkylene, oxaalkylene and oligo-oxaalkylene groups of up to 12 carbon atoms.

Preferably B and B¹ are the same.

When X is a group of formula (IVD) preferably B is a group of formula -[(CR⁴₂CR⁴₂)_{c}O_{b}]CR⁴₂CR⁴₂-, eg. -(CH₂CH₂O)_{c}(CH₂CH₂)-.

The groups of formula (IVE) are: 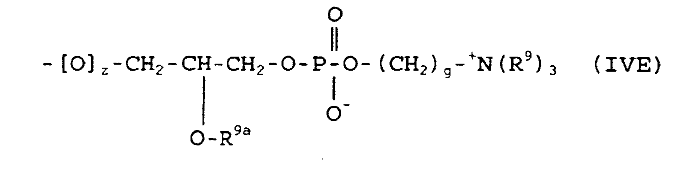 wherein the groups R⁹ are the same or different and each is hydrogen or C₁-C₄ alkyl, R^{9a} is a hydrogen or, more preferably, a group -C(O)B²R^{9b}, R^{9b} is hydrogen or methyl, preferably methyl, B² is a valence bond or a straight or branched alkylene, oxaalkylene or oligo-oxaalkylene group, and g is from 1 to 4; and
if B is other than a valence bond z is 1 and if B is a valence bond z is 0 if X is directly bonded to an oxygen or nitrogen atom and otherwise z is 1.

Preferably the groups R⁹ are the same. It is also preferable that at least one of the groups R⁹ is methyl, and more preferable that the groups R⁹ are all methyl.

Preferably g is 1 or 2, more preferably 2.

Preferably B² is:
a valence bond;
an alkylene group of formula -(CR^{3b}₂)_{ab}-, wherein the groups -(CR^{3b}₂)- are the same or different, and in each group -(CR^{3b}₂)- the groups R^{3b} are the same of different and each group R^{3b} is hydrogen or C₁₋₄ alkyl, preferably hydrogen, and ab is from 1 to 12, preferably 1 to 6;
an oxaalkylene group such as alkoxyalkyl having 1 to 6, carbon atoms in each alkyl moiety, more preferably -CH₂O(CH₂)₄-; or
an oligo-oxaalkylene group of formula
-[(CR^{4b}₂)_{bb}O]_{cb}- where the groups -(CR^{4b}₂)- are the same or different and in each group -(CR^{4b}₂)- the groups R^{4b} are the same or different and each group R^{4b} is hydrogen or C₁₋₄ alkyl, preferably hydrogen, and bb is from 1 to 6, preferably 2 or 3, and cb is from 1 to 12, preferably 1 to 6.

Preferred groups B² include a valence bond and alkylene, oxaalkylene and oligo-oxaalkylene groups of up to 12 carbon atoms.

Preferably B and B² are the same.

When X is a group of formula (IVE) preferably B is a group of formula -[(CR⁴₂CR⁴₂)_{b}O]_{c}CR⁴₂CR⁴₂-, eg. -(CH₂CH₂O)_{c}CH₂CH₂-.

The groups of formula (IVF) are: 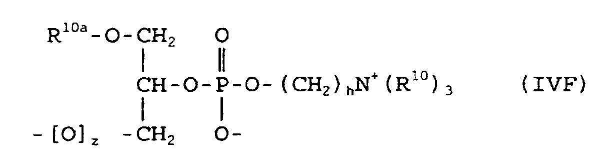 wherein the groups R¹⁰ are the same or different and each is hydrogen or C₁₋₄ alkyl, R^{10a} is hydrogen or, more preferably, a group -C(O)B³R^{10b} where R^{10b} is hydrogen or methyl, preferably methyl, B³ is a valence bond or a straight or branched alkylene, oxaalkylene or oligo-oxaalkylene group, and h is from 1 to 4; and
if B is other than a valence bond z is 1 and if B is a valence bond z is 0 if X is directly bonded to the oxygen or nitrogen and otherwise z is 1.

Preferably the groups R¹⁰ are the same. It is also preferable that at least one of the groups R¹⁰ is methyl, and more preferable that the groups R¹⁰ are all methyl.

Preferably h is 1 or 2, more preferably 2.

Preferably B³ is:
a valence bond;
an alkylene group of formula -(CR^{3c}₂)_{ac}-, wherein the groups -(CR^{3c}₂)- are the same or different, and in each group -(CR^{3c}₂)- the groups R^{3c} are the same or different and each group R^{3c} is hydrogen or C₁₋₄ alkyl, preferably hydrogen, and ac is from 1 to 12, preferably 1 to 6; an oxaalkylene group such as alkoxyalkyl having 1 to 6 carbon atoms in each alkyl moiety, more preferably -CH₂O(CH₂)₄-; or
an-oligo-oxaalkylene group of formula -[(CR^{4c}₂)_{bc}O]_{cc}- where the groups -(CR^{4c}₂)- are the same or different and in each group -(CR^{4c}₂)- the groups R^{4c} are the same or different and each group R^{4c} is hydrogen or C₁₋₄ alkyl, preferably hydrogen, and bc is from 1 to 6, preferably 2 or 3, and cc is from 1 to 12, preferably 1 to 6.

Preferred groups B³ include a valence bond and alkylene, oxaalkylene and oligo-oxaalkylene groups of up to 12 carbon atoms.

Preferably B and B³ are the same.

When X is a group of formula (IVF) preferably B is a group of formula -[CR⁴₂CR⁴₂)_{b}O]_{c}CR⁴₂CR⁴₂-, eg. -(CH₂CH₂O)_{c}CH₂CH₂-.

Particular examples of preferred monomers bearing a group containing a centre of permanent positive charge are 2-(methacryloyloxy)ethyl-2'-(trimethylammonium)ethyl phosphate inner salt and 1-[4-(4'-vinylbenzyloxy)butane]-2"-(trimethylammonium)ethyl phoshpate inner salt.

Monomers bearing a group containing a centre of permanent positive charge, such as those of formula (II) and (III) may be prepared by conventional techniques using known reactions, for example using a suitable substituted alkyl(alk)acrylate or suitable substituted styrene as precursor. Examples of suitable substituted alkyl(alk)acrylates include dimethylaminoethyl(meth)acrylate and 2-hydroxyethyl(meth)acrylate.

Monomers containing a group of formula (IVB) or (IVC) may be prepared as described in Reference Example 1 to 3 or by analogous known methods.

Monomers of formula (II) or (III) containing a group of formula (IVD) in which R^{8a} is -C(O)B¹R^{8b} may be prepared by selective acylation of glycerophosphorylcholine or analogues thereof at the primary hydroxyl group with an activated acid derivative such as an acid anhydride O(C(O)B¹R^{8b})₂ or an acid halide R^{8b}B¹COHal where B¹ and R^{8b} are as defined above and Hal is halogen, followed by acylation of the secondary hydroxyl group with an appropriate acylating agent, for example methacryloyl chloride. Purification, for example by column chromatography on a suitable support, may be performed after each acylation or after the second acylation only. Suitable activated acid derivatives include acid anhydrides, acid halides, reactive esters and imidazolides. The acylations may be performed in a suitable anhydrous, aprotic solvent, for example N,N-dimethylformamide, optionally in the presence of a suitable non-nucleophilic base, for example triethylamine.

Alternatively, the primary alcohol group in glycerophosphoryl choline or an analogue thereof may be blocked by reaction with a suitable protecting group reagent, for example t-butyldimethylsilyl chloride, under standard conditions and the secondary hydroxy group then treated with an acylating agent such as methacryloyl chloride. The t-butyldimethylsilyl protecting group may be removed by treatment with a dilute organic or mineral acid, for example p-toluene sulphonic acid, hydrochloric acid or with tetra-butylammonium fluoride. The deblocked primary hydroxyl group may then be treated with an activated acid derivative such as an acid anhydride O(C(O)B¹R^{8b})₂ or acid halide R^{8b}B¹COHal where B¹ and R^{8b} are as defined above, and Hal is halogen.

Analogues of glycerophosphorylcholine (compounds of formula (II) or (III) containing a group (IVD) where R^{8a} is hydrogen) may be prepared by reaction of phosphorus oxychloride with a bromoalcohol in an inert aprotic solvent, such as dichloromethane, to give a bromoalkylphosphorodichloridate. The dichloro derivative thus produced may then be treated with an appropriately protected glycerol derivative, for example 2,2-dimethyl 1,3-dioxolane-4-methanol, in the presence of a base, for example triethylamine, followed by acid hydrolysis to give a bromoalkylphosphoro-glycerol derivative. This may then be treated with an amine NR⁸₃, where R⁸ is as defined above, for example trimethylamine, to generate the glycerophosphorylcholine analogue. This preparation is depicted in the following scheme. 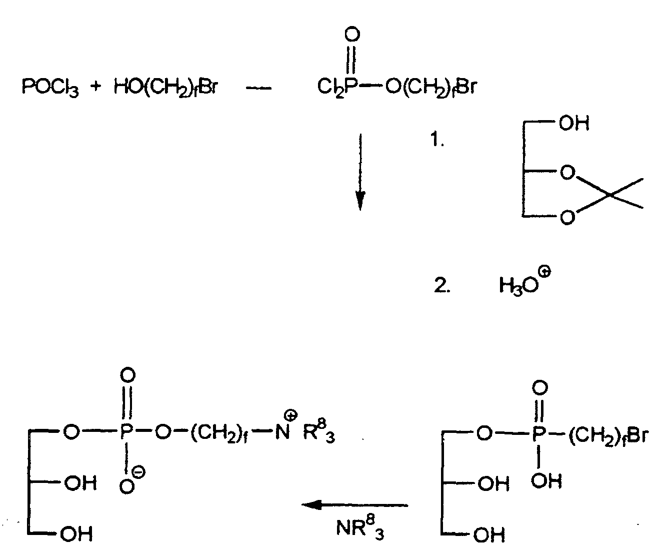 where R⁸ and f are as defined in relation to groups of formula (IVD).

Monomers of formula (II) or (III) containing a group of formula (IVE) in which R^{9a} is -C(O)B²R^{9b} may be prepared by the selective acylation of glycerophosphorylcholine or an analogue thereof at the primary hydroxyl group with for example, methacryloyl chloride followed by reaction at the secondary hydroxyl group using an activated acid derivative, such as an acid halide O(C(O)B²R^{9b})₂ or an acid halide R^{9b}B²COHal, where B² and R^{9b} are as defined above and Hal is halogen. The intermediates and final products may be purified, as necessary using column chromatography. Optionally protecting group strategy, similar to that outlined above in relation to production of monomers containing a group of formula (IVD) may be employed.

Monomers of formula (II) or (III) containing a group of formula (IVF) may be prepared in an analogous manner to monomers containing groups of formula (IVD) or (IVE).

### Comonomer of formula VI

The comonomers contain an alkyl group of 6 or more carbon atoms which group optionally contains one or more etheric oxygen atoms and optionally one or more carbon-carbon double or triple bonds.

The alkyl group contains up to 24 carbon atoms, for instance up to 18 carbon atoms.

Preferred comonomers of formula (VI) bearing a group Q include those of formula (VII) and (VIII): 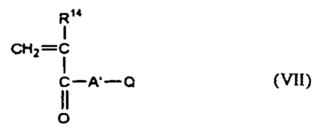 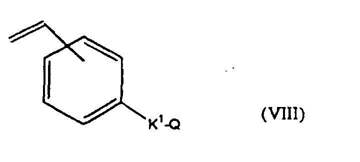 wherein:
R¹⁴, A', K¹ and Q are as defined in relation to formula (VI).

Preferably in the compounds of formula (VII) R¹⁴ is hydrogen methyl or ethyl, more preferably methyl so that the compound of formula (VII) is preferably an acrylic acid, methacrylic acid or methacrylic acid derivative.

In the compounds of formula (VIII) K¹ may for instance be a valence bond. Where K¹ is a group then preferably 1 is from 1 to 6, more preferably 1, 2 or 3 and most preferably 1 is 1. When K¹ is a group -(CH₂)ₗNR¹⁶⁻, -(CH₂)ₗOC(O)NR¹⁶-, -(CH₂)ₗNR¹⁶C(O)O-, -(CH₂)ₗNR¹⁶C(O)-, -(CH₂)ₗC(O)NR¹⁶- or -(CH₂)ₗNR¹⁶C(O)NR¹⁶- then R¹⁶ is preferably hydrogen, methyl or ethyl, more preferably hydrogen.

In the compounds of formula (VIII), preferably the vinyl group is para to the group -K¹-Q.

Preferably Q is:
an alkyl group of formula -(CR¹⁷₂)ₘCR¹⁷₃ wherein the groups -(CR¹⁷₂)- are the same or different, and in each group -(CR¹⁷₂) the groups R¹⁷ are the same or different and each group R¹⁷ is hydrogen or C₁₋₄ alkyl and m is from 5 to 23,
an alkoxyalkyl having 1 to 12 carbon atoms in each alkyl moiety; unsubstituted or substituted by one or more fluorine atoms; or
an (oligo-alkoxyl) alkyl group of formula -[(CR¹⁸₂)ₙO]ₒ (CR¹⁸₂)ₙR¹⁸ where the groups -(CR¹⁸₂)- are the same or different and in each group -(CR¹⁸₂)- the groups R¹⁸ are the same or different and each group R¹⁸ is hydrogen, fluorine or C₁₋₄ alkyl or fluoroalkyl and n is from 2 to 6, preferably 3 to 4, and 0 is from 1 to 12.

When Q is a group -[(CR¹⁸₂)ₙO]ₒ(CR¹⁸₂)ₙR¹⁸ wherein all the groups R¹⁸ are hydrogen and in all the groups -[(CR¹⁸₂)ₙO]- n is 2 the group of formula Q is not able to form strong secondary valence interactions with hydrophobic surfaces. Whilst residues of monomers containing such a group may be included in the polymers of the invention, it is also necessary to include residues of monomers which are capable of forming such strong secondary valence interactions if such interactions are to bind a polymer to a surface. Monomers which have groups containing oligo(higher alkylene) oxide moieties can be used to provide monomers which contain oligo -alkylene oxide moieties in which at least 50mol% of individual alkylene oxide units contain 3 or more carbon atoms. Thus, for instance a mixed oligo(ethylene oxide/propylene oxide) side chain could be used provided that there are more propylene oxide units than ethylene oxide units.

Where Q is an (oligo-alkoxy)-alkyl group containing residues -[(CR¹⁸₂)ₙO]- wherein n is 2, then preferably n is 2 in no more than 50 mol% of the residues -[(CR¹⁸₂)ₙO]-.

Alternatively, Q may be a group in which one or more of the alkyl or alkylene moieties in such an alkyl, alkoxyalkyl or (oligoalkoxy) alkyl group is replaced by a corresponding alkenyl, alkynyl, alkenylene or alkynylene moiety.

Preferred groups Q include alkyl, alkoxyalkyl and (oligo-alkoxy)alkyl groups optionally containing one or more carbon-carbon double or triple bonds of 8 or more, more preferably 10 or more, even more preferably 12 or more, for instance 14 or more, such as 16 or more carbon atoms.

Particularly preferred groups are straight chain alkyl groups optionally containing one or more carbon-carbon double or triple bonds.

In one specific embodiment the group Q does not contain any ethylenic unsaturation, i.e. any carbon-carbon double or triple bonds.

Particular examples of comonomers containing an alkyl group include: n-dodecyl methacrylate, octadecyl methacrylate, hexadecyl methacrylate, p-octyl styrene, and p-dodecyl styrene. n-Dodecyl methacrylate is particularly preferred.

Comonomers containing a physisorbable alkyl group which does not contain a carbon-carbon double or triple bond, such as those of formulae (VII) and (VIII) are commercially available or may be prepared by conventional techniques using known reactions.

In a second specific embodiment of such comonomers, the group Q does contain ethylene unsaturation, i.e. one or more carbon-carbon double or triple bonds. Such comonomers may for example contain a vinylic, divinylic, acetylenic or diacetylenic moiety. Comonomers containing acetylenic rather than vinylic unsaturation are in general preferred, especially those containing a single acetylenic group.

Comonomers which contain such an ethylenic unsaturated group are capable of providing crosslinking between linear polymer claims once the polymer is coated onto a substrate, as well as binding to the substrate by physisportion. Such crosslinking may improve the stability of the coating and is typically formed by irradiation, for example with uv -or gamma-radiation. The crosslinking of such groups may be employed either alone or in addition to the use of a comonomer containing a reactive group as a crosslinkable comonomer as described below.

Particularly preferred crosslinkable comonomers capable of binding to a substrate by physisorption are those of formula (VIIA) and (VIIIA).

CH₂=CR¹⁴-C(O)A'-QQ (VIIA)

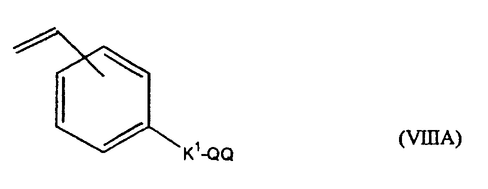

in which R¹⁴, A' and K¹ are as hereinbefore defined and QQ is an alkynyl group containing 6 or more carbon atoms and one or two, preferably one, carbon-carbon triple bonds provided that the acetylenic moieties are not directly bonded to A' or K¹.

The present invention provides, as a further feature, comonomers of formula (VIIA) and (VIIIA).

Amongst such comonomers it is preferred that QQ is a group containing 6 to 4 carbon atoms, preferably 8 or more, more preferably 10 or more, even more preferably 12 or more, for instance 14 or more, such as 16 or more carbon atoms.

It is also preferred that the group QQ does not contain a terminal acetylenic moiety, i.e. a group -C≡CH.

A particularly preferred group QQ is 7-dodecynyl and a specific example of a compound of formula (VIIA) containing such a group is dodec-7-yn-1-ol methacrylate.

The compound of formula (VIIA) and (VIIIA) and other comonomers of formula (VII) and (VIII) containing an ethylenically unsaturated physisorbable group Q, may be prepared by analogy with known methods. Their preparation is illustrated by Reference Example 5.

Any conventional technique may be used for polymerisation, typically thermal or photochemical polymerisation. Where comonomers capable of producing crosslinking in the coated polymer film are present, the polymerisation condition are set such that crosslinking does not occur during polymerisation. Thus, for example, actinic radiation would not be used to prepare a polymer containing a comonomer which can form crosslinks by exposure to actinic radiation.

For thermal polymerisation a temperature from 40 to 100°C, typically 50 to 80°C is used. For photochemical polymerisation actinic radiation such as gamma, U.V., Visible or microwave radiation may be used. Typically U.V. radiation of wavelength 200 to 400 nm is used.

The polymerisation is generally performed in a reaction medium, which is for instance a solution or dispersion using as a solvent for example acetonitrile, dimethyl formamide, chloroform, dichloromethane, ethyl acetate, dimethyl sulphoxide, dioxan, benzene, toluene, tetrahydrofuran, or where the polymer does not contain groups which react with protic solvents, water or an alkanol containing from 1 to 4 carbon atoms, e.g. methanol, ethanol or propan-2-ol. Alternatively, a mixture of any of the above solvents may be used.

The polymerisation may be carried out in the presence of one or more polymerisation initiators, such as benzoyl peroxide, 2,2'-azo-bis(2-methylpropionitrile) or benzoin methyl ether. Other polymerisation initiators which may be used are disclosed in "Polymer Handbook", 3rd edition, Ed. J. Brandrup and E.H. Immergut, Pub. Wiley-Interscience, New York, 1989.

Generally the copolymerisation is performed for 1 to 72 hours, preferably 8 to 48, for instance 16 to 24 hours, and under an inert atmosphere of for example nitrogen or argon. The polymer is generally purified by dialysis, precipitation in a non-solvent (e.g. diethyl ether or acetone) or ultrafiltration. The resulting polymer is generally dried under vacuum, eg. for 5 to 72 hours and has a molecular weight from 10,000 to 10 million, preferably from 20,000 to 1 million.

The precise proportion and nature of the various comonomers used to prepare a copolymer according to the present invention comprising residues of a monomer containing a zwitterionic group and comonomer may be adjusted to provide a copolymer which is particularly suitable for coating a particular surface. Thus the proportion of comonomer may be adapted to provide efficient physisportion at a particular hydrophobic surface. It will be appreciated that to obtain the desired combination of properties more than one type of zwitterionic monomer and of comonomer may be used.

The monomer composition which is subjected to polymerisation to provide a polymer according to the invention comprises a minimum of 0.01%, preferably 1%, more preferably 5% by weight of zwitterionic monomer or monomers.

The monomer composition further comprises a minimum of 0.01%, preferably 1%, more preferably 5% by weight of comonomer or monomers.

Preferably the monomer composition comprises no more than 95%, more preferably no more than 90% and even more preferably no more than 80% by weight of comonomer or monomers.

Preferably the molar ratio in the copolymer of zwitterionic residues to comonomer residues is from 5:95 to 80:20, more preferably 10:90 to 50:50.

In addition the monomer or comonomer composition may comprise further components such as a polymerisation initiator, chain transfer agent, acid, base, surfactant, emulsifier or catalyst of conventional type each in an amount from 0.1% to 5%, typically from 0.2% to 3% and preferably about 0.5%, by weight each relative to the total weight of the monomers.

As a further feature the present invention provides a process for biocompatibilising a surface which comprises coating the surface with a polymer according to the present invention. Various types of surfaces may be coated depending upon the nature of the groups in the polymer capable of binding it to the surface.

The polymers are particularly suitable for coating hydrophobic surface, e.g. polyethylene, polypropylene and polytetrafluoroethylene (PTFE) surfaces.

Hydrophilic surfaces may be rendered hydrophobic and suitable for coating with such polymers by known methods (see for example "Chemical Reactions of Polymers" Ed. E.M. Fettes, 1964, Interscience, London).

Treatment with such a polymer carried out by coating the surface with a dispersion (including a microdispersion) of the polymer in an alcohol solvent or a mixture thereof, e.g. methanol, ethanol or isopropanol.

The treatment is generally carried out at ambient or elevated temperature, such as from 5 to 60°C.

In one specific embodiment of the invention, the copolymer is coated onto the substrate in the form of a microdispersion for example a microemulsion.

Materials may be coated with polymers of the invention by known techniques, such as dip-coating spray-coating, web-coating or spin coating.

Materials having surfaces coated according to the present invention can be used as a construction material for implants or prostheses for the human or animal body, particularly where these implants or prostheses are to come into direct physical contact with blood and where biocompatibility and particularly haemocompatibility are required e.g. in heart valves. They can also be used in the construction of membranes and other devices that are to be brought into contact with blood or other body fluids on an extra-corporeal basis, for example in heart-lung machines or artificial kidneys.

Additionally the polymers of the invention can be used to coat materials employed in down stream processing applications e.g. separation membranes and process equipment and tubing. In particular the materials of the invention can be used to modify the surface properties of biofiltration membranes in bioreactors and fermentation systems, where the membranes come into direct contact with complex biological solutions containing e.g. proteins, polysaccharides, fats and even whole cells. The polymers of the invention are particularly useful in reducing membrane fouling by the components of a process solution.

When the polymers of the present invention are used to coat the surface of a material which is then used in the construction coat of finished devices, it may be necessary to take precautionary steps to ensure that the coated surface is not damaged and the effectiveness of the treatment reduced before the finished device is produced.

In addition, the polymers of the present invention can be used to coat finished implants, prostheses, membranes, catheters, contact lenses, intraocular lenses, and other devices which are coated with a polymer according to the present invention to impart biocompatibility to the article.

The invention thus also provides a finished device comprising a surface having a coating thereon of a polymer of the present invention.

The following Examples illustrate the preparation of polymers for use in the present invention.

### Examples

The following assays have been used to evaluate coatings of polymers according to the present invention.

### Protein adsorption using an enzyme immunoassay

The assay determines absorption of human fibrinogen at a surface. This protein is representative of protein which is typically adsorbed at a surface. The assay can be readily modified to determine the absorption of other proteins.

Discs (7mm in diameter) of untreated material (as controls) and material treated with polymer as described below, were prepared and washed with phosphate buffered saline (PBS) for at least 10 minutes in the wells of microplates. The samples were incubated with human plasma (300µl) for 10 minutes and then washed with PBS three times. Each of the test samples and each of the control samples were treated with human fibrinogen-specific antibody (300µl) for 30 minutes and again washed with PBS three times. As a control for non-specific binding of antibody to the samples, each sample was also incubated with non-specific antibody (300µl) for 30 minutes. A conjugate of horseradish peroxidase and a second antibody specific to the first antibody (300µl) was added to both the test samples and the controls and incubated for 30 minutes before washing. Each of the test samples and the controls were transferred to new microplates and a solution of 2,2'-azino-bis(3-ethyl benzthiazoline-6-sulphonic acid) (ABTS) in phosphate-citrate buffer (300µl, 0.6mg/ml) added, the reaction was allowed to proceed for 10 minutes. At this time an aliquot of the mixture (200µl) was removed and added to a solution of citric acid and sodium azide in distilled water (20µl, 0.21g/ml and 2mg/ml respectively). The optical density of the solutions was measured using a Techgen automated plate reader at 650nm using the ABTS solution as blank.

In an alternative procedure, rather than using ABTS, each of the samples was transferred to wells of new microplates and a solution of o-phenylene diamine (OPD) in phosphate-citrate buffer (300µl, 0.4mg/ml) added, and the reaction was allowed to proceed for 10 minutes. At this time an aliquot of the mixture (200µl) was removed from each well and the optical density of the solutions was measured using a Techgen automated plate reader at 450nm using the OPD solution as blank.

### Activated Platelet Study

Blood was collected from a healthy adult volunteer using the double syringe method where the first 5ml of blood is discarded. The blood was collected into trisodium citrate (32g/l) in the proportion of 9 volumes to 1 volume citrate in plastic tubes. The samples were kept at room temperature on a spiral mixer until used.

Discs (7mm in diameter) of untreated material as controls and material treated with polymers as described below were prepared and placed into the wells of a microplate. The samples were incubated with whole fresh citrated blood (200µl) on a rotary mixer for 30 minutes before washing in PBS four times. Platelet activation was measured by a proprietary assay [Lindon, J.N. et al., Blood, 68, 355 (1986)].

In an alternative procedure half of the test replicates were incubated with citrated blood (200µl) and the remainder were incubated with EDTA-treated blood on a phase shaker for 30 minutes before washing in PBS four times. Platelet activation was measured in a manner similar to that described above for detection of proteins by enzyme immunoassay using antibodies against GMP140 to detect the presence of this platelet activation marker on the surface of biomaterials. In the presence of EDTA, which extracts calcium from inside platelets, activation is inhibited, so that incubation with EDTA-treated blood acts as a non-specific control for activation, obviating the need for incubation in non-specific antibody.

### C-Reactive protein (CRP) binding assay

C reactive protein is a protein which binds specifically to isolated ammonium phosphate esters groups e.g. phosphoryl choline groups which are attached to a surface.

Discs (7mm in diameter) of untreated material and material treated with polymer as described below, were prepared and washed with HEPES-buffered saline (HBS) for at least 10 minutes in the wells of microplates. The samples were incubated in quadruplet for 45 minutes in a protein solution consisting of bovine serum albumin (BSA) (40 mg/ml) and CRP (0.012 mg/ml) in HBS and containing calcium chloride (1mM). In parallel, identical samples (both coated and uncoated) were incubated either in BSA/Ca²⁺ solution in the presence of soluble phosphoryl choline (1.5 mg/ml) or in BSA/CRP solution containing EDTA (20mM) rather than calcium chloride.

After incubation, all the samples were washed in phosphate buffered saline (PBS) three times and then incubated for 1 hour in 300µl of a 1:100 dilution of commercially available anti-CRP antibody conjugated with horseradish peroxidase. The samples were washed three times in PBS as before and transferred to new microplates. A solution of o-phenylene diamine (OPD, 0.4 mg/ml) in phosphate-citrate buffer was added and the reaction allowed to proceed for ten minutes. At this time an aliquot of the mixture (200µl) in each of the wells was transferred to a new well, and the optical density of the solutions measured using a Techgen automated plate-reader at 450 nm using the OPD solution as a blank.

A positive control containing isolated phosphoryl choline groups may be provided using beaded agarose immobilised with p-aminophenylphosphoryl choline. The specificity of CRP binding may be demonstrated by inhibition of phosphoryl choline and dependance upon the presence of calcium.

### Example 1

### Preparation of poly(2-(methacryloyloxyethyl)-2'-(trimethylammonium)ethyl phosphate inner salt-co-n-dodecyl methacrylate) (1:2)

2-(Methacryloyloxyethyl)-2'-(trimethylammonium) ethyl phosphate inner salt (5.0g, 0.0170 mole) and n-dodecylmethacrylate (8.55g, 0.0340 mole) were dissolved in methanol/THF (140ml; 5:9). The solution was stirred (250rpm) at 23°C under a stream of nitrogen (50ml/min) for 30 minutes. 2,2'-Azo-bis(2-methylpropionitrile) (0.17g, 1.02 mmole) was added and the flow of nitrogen was reduced to 10ml/min, the temperature was raised to 60°C. This temperature and nitrogen flow rate were maintained for 16 hours.

The mixture was allowed to cool and vacuum filtered. The filtrate was collected and the polymer precipitated by dropwise addition to acetone (1.21).

The polymer was isolated by filtration under vacuum under a nitrogen atmosphere and finally dried under reduced pressure overnight at room temperature. The resulting polymer (9.5g, 80%) was a fine white powder.

In an alternative procedure, 2-(methacryloyloxyethyl)-2'-(trimethylammonium)ethyl phosphate inner salt (12.06g, 0.0409 mole) and n-dodecyl methacrylate (20.52g, 0.0808 mole) were dissolved in propan-2-ol (215ml) and ethyl acetate (85ml). The solution was stirred (250rpm) at 23°C under a stream of nitrogen (50ml/min) for 30 minutes, 2,2'-azo-bis(2-methylpropionitrile) (0.0645g, 0.39 mmole) was added and the flow of nitrogen was reduced to 10ml/min, the reaction temperature was raised to 60°C. This temperature and nitrogen flow rate were maintained for 40 hours.

The mixture was allowed to cool and vacuum filtered. The filtrate was evaporated to dryness using a rotary evaporator and dissolved in dichloromethane (120ml) and methanol (10ml). The polymer was isolated from this mixture by precipitation in acetone (2500ml), vacuum filtration and drying. The polymer was redissolved in dichloromethane (100ml) and methanol (30ml) and isolated as described above.

The resulting polymer, obtained in 70-80% yield was a white powder.
NMR(200MHz, d, ppm, CD₃OD/CDCl₃) 4.2-4.4 (b), 3.8-4.2 (b), 3.6-3.8 (b), 3.3 (s), 1.8-2.2 (b), 1.5-1.8 (b), 1.2-1.5 (s), 0.8-1.0 (s)
IR(cm⁻¹, KBr disc) 3430, 2929, 2854, 1732, 1469, 1246, 1156, 1089, 968, 788.

| Elemental Analysis | | | | |
|---|---|---|---|---|
| theory | C 64.5, | H 9.9, | N 1.8, | P 3.9 |
| actual | C 59.0, | H 10.0, | N 1.8, | P 3.9 |

The polymer had a relative viscosity in ethanol: chloroform (50:50) at 25°C of 1.13 ± 0.02 (when prepared using methanol: THF as solvent) and 1.26 ± 0.02 (when prepared using propan-2-ol: ethylacetate as solvent).

### Example 2

### The coating of poly(ethylene) ribbon with poly(2-(methacryloyloxyethyl)-2'-(trimethylammonium)ethyl phosphate inner salt -co- n-dodecyl methacrylate) (1:2)

Poly(ethylene) ribbon was washed with ethanol and allowed to dry in the air. The poly(2-(methacryloyloxyethyl)-2'-(trimethylammonium)ethyl phosphate inner salt -co- n-dodecyl methacrylate) (1:2) (50mg) was dissolved in ethanol/chloroform (5ml, 40:1) and the poly(ethylene) coated by a one stage mechanical dip-coating procedure drawing the ribbon through the solution slowly. The coated ribbon was allowed to dry in a dust free atmosphere at room temperature.

The treated poly(ethylene) showed a 65% reduction in protein adsorption as compared to the untreated material and a 83% reduction in platelet activation (determined using the assay of Lindon *et al*) as compared to the untreated material.

In the C-reactive protein binding assay, no binding of CRP was observed to the treated poly(ethylene). In contrast, CRP binding was observed for a positive control. The specificity of this CRP binding was demonstrated by the fact that it was inhibited by phosphoryl choline and dependence upon the presence of calcium.

According to an alternative procedure, polyethylene ribbon was washed in propan-2-ol and coated with the copolymer dissolved in propan-2-ol (1g in 100ml) at 40°C using an otherwise analogous manner.

### Example 3

In an analogous manner to that described in example 2, steel and PVC substrates were coated with poly(2-(methacryloyloxyethyl)-2'-(trimethylammonium)ethyl phosphate inner salt -co-n-dodecyl methacrylate) (1:2).

The treated steel samples showed a reduction in protein adsorption of over 80% compared to untreated samples and the treated PVC samples showed a reduction in protein adsorption of over 70% compared to untreated samples as measured by the enzyme immunoassay described above. In a further determination a sample of stainless steel coated with the polymer showed a reduction, compared to untreated material, in protein adsorption of 84% as determined by the enzyme immunoassay technique and a reduction of 95% in platelet activation as determined by the platelet activation assay described above using anti-GMP140. A further sample of PVC coated with the polymer showed a reduction of 87% in protein adsorption and a reduction of 100% in platelet activation, compared to untreated material, using the same assay techniques.

### Example 4

### Preparation of poly(2-(methacryloyloxyethyl)-2'-(trimethylammonium)ethyl phosphate inner salt-co-n-dodecyl methacrylate) (1:4)

2-(Methacryloyloxyethyl)-2'-(trimethylammonium)ethyl phosphate inner salt (10.00g, 0.0339 mole) and n-dodecyl methacrylate (35.56g, 0.1400 mole) were dissolved in propan-2-ol (200ml) and ethyl acetate (200ml). The solution was stirred (250rpm) at 23°C under a stream of nitrogen (50ml/min) for 30 minutes. 2,2'-Azo-bis-(2-methylpropionitrile) (0.0886g, 0.54mmole) was added and the flow of nitrogen was reduced to 10ml/min, the reaction temperature was raised to 60°C. This temperature and nitrogen flow rate were maintained for 40 hours.

The mixture was allowed to cool and vacuum filtered. The filtrate was evaporated to dryness using a rotary evaporator and dissolved in dichloromethane (130ml). The polymer was isolated from this mixture by precipitation in acetone (2500ml), vacuum filtration and drying. The polymer was redissolved in dichloromethane (120ml) and methanol (10ml) isolated as before.

The resulting polymer, obtained in 70-80% yield was a white solid.
NMR(200MHz, d, ppm, CD₃OD/CDCl₃) 4.2-4.4 (b), 3.8-4.2 (b), 3.6-3.8 (b), 3.3 (s), 1.8-2.2 (b), 1.5-1.8 (b), 1.2-1.5 (s), 0.8-1.0 (s)
IR(cm⁻¹, KBr disc) 3430, 2929, 2854, 1732, 1469, 1246, 1156, 1089, 968, 788.

| Elemental Anaylsis: | | | | |
|---|---|---|---|---|
| theory | C: 68.9, | H 10.5, | N 1.1, | P 2.4 |
| actual | C: 65.5, | H 10.8, | N 1.1, | P 2.4 |

The polymer had a relative viscosity in ethanol: chloroform (50:50) at 25°C of 1.26 ± 0.02.

Samples of polyethylene, steel and PVC were coated using the methods described in Examples 2 and 3. Using the enzyme immunoassay for protein adsorption, a greater than 80% reduction in protein adsorption on steel and greater than 70% reduction in protein adsorption on PVC were obtained.

In a further determination, a sample of stainless steel coated with the polymer showed a reduction of 80% in protein adsorption (determined by the enzyme immunoassay described above) and a reduction of 95% in platelet activation (determined by the platelet activation assay described above using anti-GMP 140), compound to untreated material. A sample of PVC coated with the polymer showed a reduction of 70% in protein adsorption and 100% in platelet activation compound to untreated material using the same assay techniques.

### Example 5

### Preparation of poly(2-(methacryloyloxyethyl)-2'-(trimethylammonium)ethyl phosphate inner salt-co-n-hexadecyl methacrylate (1:2)

2-(Methacryloyloxyethyl)-2'-(trimethylammonium)ethyl phosphate inner salt (2.00g, 6.78 mmole) and n-hexadecyl methacrylate (4.21g, 0.0136 mole) were dissolved in propan-2-ol (35.5ml) and ethyl acetate (14.5ml). The solution was stirred (250rpm) at 23°C under a stream of nitrogen (50ml/min) for 30 minutes.
2,2'-Azo-bis(2-methylpropionitrile):(0.0168g, 0.10mmole) was added and the flow of nitrogen was reduced to 10ml/min, the reaction temperature was raised to 60°C. This temperature and nitrogen flow rate were maintained for 40 hours.

The mixture was allowed to cool and vacuum filtered. The filtrate was evaporated to dryness using a rotary evaporator and dissolved in dichloromethane (130ml) and methanol (10ml).

The polymer was isolated from this mixture by precipitation in acetone (700ml), vacuum filtration and drying. The polymer was redissolved in dichloromethane (10ml) and methanol (10ml) isolated as described above. The resulting polymer, obtained in 40-60% yield was a white solid.
NMR(200MHz, d, ppm, CD₃OD/CDCl₃) 4.2-4.4 (b), 3.8-4.2 (b), 3.6-3.8 (b), 3.3 (s), 1.8-2.2 (b), 1.5-1.8 (b), 1.2-1.5 (s), 0.8-1.0 (s)
IR(cm⁻¹, KBr disc) 3430, 2929, 2854, 1732, 1469, 1246, 1156, 1089, 968, 788.

### Example 6

### Preparation of poly(2-(methacryloyloxyethyl)-2'-(trimethylammonium)ethyl phosphate inner salt -co- 7 dodecynmethacrylate (1:2)

The polymer was prepared by a method analogous to that described in Examples 4 and 5 using 2-(methacryloyloxyethyl)-2'-(trimethylammonium)ethyl phosphate inner salt (8.41g, 0.0285 mole) and n-dodecynmethacrylate (14.31g, 0.0572 mole) dissolved in propan-2-ol (160ml) and ethyl acetate (60ml).

The resulting polymer, obtained in 35% yield was a white powder.
NMR(100MHz, d, ppm, CD₃OD/CDCl₃)4.2-4.4(b), 3.8-4.2(b), 3.6-3.8(b), 3.3(s), 2.25(s), 1.8-2.2(b), 1.5-1.8(b), 1.2-1.5(s), 0.8-1.0(s)
IR(cm⁻¹,KBr disc) 3430, 2929, 2854, 1732, 1469, 1246, 1156, 108, 968, 788.

| Elemental Analysis | | | | |
|---|---|---|---|---|
| theory | C 65.1 | H 9.0 | N 1.8 | P 3.9 |
| actual | C 54.9 | H 8.5 | N 1.9 | P 4.4 |

### Relative Viscosity (chloroform/ethanol 50:50, 30°C) 1.18.

The polymer may be crosslinked by gamma-irradiation or exposure to UV light which renders the polymer insoluble in dichloromethene/methanol.

A sample of stainless steel treated with the polymer showed a reduction in protein adsorption of 68% (determined by the enzyme immunoassay described above) and a reduction in platelet activation of 100% (determined by the platelet activation assay described above, using anti GMP 140) compared to untreated material. A sample of PVC coated with the polymer showed a reduction in protein adsorption of 60% compared to untreated material as determined by the same assay technique.

### Example 7

### Preparation of poly(2-(acryloyloxyethyl)-2'-(trimethylammonium)ethyl phosphate inner salt -co-n-dodecyl methacrylate) (1:2)

The polymer was prepared by a method analogous to that described in Examples 4 and 5 using 2-(acryloyloxyethyl)- 2'-(trimethylammonium)ethyl phosphate inner salt (3.0g, 0.0107 mole) and n-dodecyl methacrylate (5.42g, 0.0214 mole) dissolved in propan-2-ol (53ml) and ethyl acetate (22ml).

The resulting polymer, obtained in 58% yield was a white solid.
NMR(100MHz, d, ppm, CD₃OD/CDCl₃) 4.2-4.4(b), 3.8-4-2(b), 3 6-3.8(b), 3.3(s), 1.8-2.2(b), 1.5-1.8(b), 1.2-1.5(s), 0.8-1.0(s)
IR(cm⁻¹,KBr disc) 3430, 2929, 2854, 1732, 1469, 1246, 1156, 1089, 968, 788.

| Elemental Analysis | | | | |
|---|---|---|---|---|
| theory | C 64.9 | H 8.7 | N 1.8 | P 4.0 |
| actual | C 57.8 | H 9.8 | N 2.1 | P 4.9 |

A sample of stainless steel treated with the polymer showed a reduction in protein adsorption of 53% (determined by the enzyme immunoassay described above) and a reduction in platelet activation of 100% (determined by the platelet activation assay described above, using anti-GMP140) compared to untreated material. A sample of PVC treated with the polymer showed a reduction in protein adsorption of 68% and a reduction in platelet activation of 100% compared to untreated material determined by the same assay techniques.

### Example 8

### Preparation of poly(2-(methacryloyloxyethyl)-2'-(trimethylammonium)ethyl phosphate inner salt -co-n-hexyl methacrylate) (1:2)

The polymer was prepared by a method analogous to that described in Examples 4 and 5 using 2-(methacryloyloxyethyl)-2'-(trimethylammonium)ethyl phosphate inner salt(2.0g, 0.0068mole) and n-hexyl methacrylate (2.31g, 0.0136 mole) dissolved in propan-2-ol (35.5ml) and ethyl acetate (14.5ml).

The resulting polymer, obtained in 34% yield was a white solid.
NMR (100MHz, d, ppm, CD₃OD/CDCl₃) 4.2-4.4(b), 3.8-4.2(b), 3.6-3.8(b), 3.3(s), 1.8-2.2(b), 1.5-1.8(b), 1.2-1.5(s), 0.8-1.0(s)
IR(cm⁻¹,KBr disc) 3430, 2929, 2854, 1732, 1469, 1246, 1156, 1089, 968, 788.

| Elemental Analysis | | | | |
|---|---|---|---|---|
| theory | C 58.8 | H 8.8 | N 2.2 | P 4.9 |
| actual | C 47.3 | H 7.9 | N 2.6 | P 5.8 |

### Example 9

### Preparation of poly(2-(methacryloyloxyethyl)-2'-(trimethylammonium)ethyl phosphate inner salt -co- n-octadecyl methacrylate)(1:2)

The polymer was prepared using 2-(methacryloyloxyethyl)-2'-(trimethylammonium)ethyl phosphate inner salt(3.0g,0.0102 mole) and n-octadecyl methacrylate (6.90g,0.0204 mole) dissolved in methanol (30ml) and THF (70ml). The reaction mixture rate was maintained for 40 hours at 60°C. The polymer was isolated from this mixture by precipitation in acetone (1200ml), vacuum filtration and drying. The resulting polymer, obtained in 55% yield was a white solid. NMR(100MHz, d, ppm,CD₃OD/CDCl₃) 4.2-4.4(b), 3.8-4.2(b), 3.6--3.8(b), 3.3(s), 1.8-2.2(b), 1.5-1.8(b), 1.2-1.5(s), 0.8-1.0(s)
IR(cm⁻¹,KBr disc) 3430, 2929, 2854, 1732, 1469, 1246, 1156, 1089, 968, 788.

### Example 10

### Preparation of poly(2-(methacryloyloxyethyl)-2'-(trimethylammonium)ethyl phosphate inner salt -co-n-dodecyl methacrylate) (14:86)

The polymer was prepared by a method analogous to that described in Example 1 using a comonomer mixture consisting of 2-(methacryloyloxyethyl)-2'-(trimethylammonium)ethyl phosphate inner salt and n-dodecyl methacrylate in a molar ratio of 14:86 using propan-2-ol/ethylacetate solvent.

A PVC substrate was coated with the polymer using a method analogous to that described in Example 3.

### Comparative Example

The fibrinogen adsorption and C-reactive protein binding to PVC substrates coated with polymers of the invention in accordance with Examples 3 and 10 was compared with that for copolymers of 2-(methacryloyloxyethyl)-2'-(trimethylammonium)ethyl phosphate, inner salt and butyl methacrylate in a molar ratio of 1:2 (Comparison A) and 14:86 (Comparison B). The comparison copolymers were prepared by a method analogous to that described in Example 1 and coated onto the PVC substrate using a method analogous to that described in Example 3. All the copolymers were prepared using the procedure described under Example 1 using a propan-2-ol/ethylacetate solvent. The results are shown in the following Table:

| | Example | | Comparison | |
|---|---|---|---|---|
| | 3 | 10 | A | B |
| Fibrinogen Adsorption | 87 | 60 | 82 | 72 |
| C-reactive Protein | 0.094 | 0.043 | 0.101 | 0.139 |
| Protein Index (x10³) | 1.1 | 0.7 | 1.9 | 1.9 |

The results were obtained using the assay techniques described above after incubation in PBS for 24 hours. The fibrinogen adsorption results are expressed as a percentage reduction in optical density relative to untreated polyvinylidene chloride. C-reactive protein results are expressed as absorbance due to C-reactive protein; a positive control showed CRP binding. Protein index is the ratio of C-reactive protein binding to fibrinogen adsorption.

These results show that in order to obtain a good reduction in protein adsorption using copolymers containing butylmethacrylate a high C-reactive protein binding must be accepted. In contrast, using longer chain alkyl monomers good reduction in protein adsorption and low C-reactive protein binding are obtained as well as good adhesion to the substrate and low swelling in aqueous environments.

Copolymers containing comonomers comprising short chain alkyl groups of up to 4 carbon atoms as potential physisorbable groups such as butyl methacrylate, in smaller molar proportions, exhibit poor adhesion to hydrophobic substrates and are subject to high swelling in aqueous environments which renders them unsuitable for use in coating surfaces.

### Example 11

Polymers from examples 1 and 4 were coated onto PVC tubing and their performance assessed in an extracorporeal system using a left heart bypass procedure in a calf model. Blood was pumped around the system continuously at physiological temperature in the absence of anticoagulant at a rate of 3.5 litre per minute. Parameters associated with the condition of circulating blood were measured throughout the experiments.

Virtually all the parameters tested gave results which showed that the presence of the coated circuit had little or no effect on the blood and the physiological function of the animals (typically three identical experiments were run on consecutive days and were very reproducible from animal to animal).

In comparison with the above an uncoated circuit cannot be successfully run for a continuous 6 hour period without the use of anticoagulant. Also blood parameters are very adversely affected in a short period of time.

Results of protein adsorption tests and macroscopic observation of circuit components indicate that both coatings perform at least as well as heparinised tubing and that, in areas of the circuit where high turbulence in the flow of the blood occurs, fewer clots were found.

### Reference Example 1

### Preparation of 2-(methacryloyloxyethyl)-2'-(trimethylammonium ethyl) phosphate inner salt

The preparation is illustrated by the reaction scheme A which follows.

### a) 2-Chloro-1,3-dioxaphospholane (1)

In a flask fitted with a pressure equalising dropping funnel, reflux condenser (fitted with a CaCl₂ guard tube) and magnetic stirrer, was placed a solution of phosphorus trichloride (220ml; 346.3g; 2.52mol) in dichloromethane (500ml). Ethylene glycol (139ml; 154.7g, 2.49mol) was then added dropwise via the dropping funnel at such a rate that the evolution of HCl did not become too excessive. On the addition of the ethylene glycol, the condenser was arranged for distillation, and the dichloromethane removed at atmospheric pressure. When the distillate temperature reached 60°C the flask was arranged for vacuum distillation using a water pump, Distillation then gave 2-chloro-1,3-dioxaphospholane (158ml; 224.5g; 71.3) as a colourless mobile liquid (which fumes in moist air) b.pt. 36-40°C/21mm Hg. [cf 45.5-47°C/20mm Hg, Lucas *et al*, J. Am. Chem. Soc., 72, 5491, (1950)].
IR (cm⁻¹, thin film) 2980, 2905, 1470, 1210, 1005, 930, 813, 770.

### b) 2-Chloro-2-oxo-1,3,2-dioxaphospholane (2)

In a flask fitted with a magnetic stirrer, reflux condenser (fitted with a CaCl₂ guard tube) and sintered glass gas inlet tube, was placed a solution of 2-chloro-1,3,2-dioxaphospholane (100.8g; 0.797mol) in dry benzene (200ml). The solution was stirred and a steady stream of oxygen was bubbled through the solution. The reaction was mildly exothermic, and temperature control was achieved by allowing the solvent to reflux. The oxygen was passed through the reaction mixture for 6 hours. The solvent was removed by rotary evaporation, and the colourless mobile residue distilled to give 2-chloro-2-oxo-1,3,2-dioxaphospholane (2) (87.41g; 77%) as a colourless mobile liquid -b.pt 95-97°C/0.2mbar [c.f. 102.5-105°C/1mbar (Edmundson, Chem. Ind. (London)), 1828 (1962); 79°C/0.4mbar (Umeda et al., Makromol. Chem. Rapid Commun., 3, 457, (1982)].

IR(cm⁻¹, thin film) 2990, 2910, 1475, 1370, 1310, 1220, 1030, 930, 865, 830.

### c) 2-(2-Oxo-1,3,2-dioxaphospholan-2-yloxy)ethyl methacrylate (3)

In a flask fitted with a magnetic stirrer, low temperature thermometer, and a pressure equalising funnel fitted with a silica gel guard tube; was placed a solution of 2-hydroxyethylmethacrylate (20.00g, 0.154mol) and triethylamine (15.60g; 0.154mol) in dry diethyl ether (300ml). The solution was stirred and cooled to between -20°C and -30°C. A solution of freshly distilled 2-chloro-2-oxo-1,3,2-dioxaphospholane(2) (21.9g; 0.154 mol) in dry diethyl ether (20ml) was then added dropwise over 30 minutes, the temperature being held at -20°C during the addition. Stirring was continued at this temperature for a further 1 hour and then for a further hour as the reaction mixture was allowed to warm to room temperature. The precipitated triethylamine hydrochloride was removed by filtration, and was washed well with dry ether. The ether was removed from the combined filtrate and washings by rotary evaporation. The cloudy oil residue was then shaken for 5 minutes with dry diethyl ether (50ml) to precipitate a further crop of triethylamine hydrochloride, which was again removed by filtration. Removal of the ether on the rotary evaporator gave (3) (34.18g; 94.3%) as a colourless viscous oil. IR (cm⁻¹, thin film) 1720, 1640, 1450, 1360, 1310, 1290, 1170, 1030, 930, 850.
NMR (CDCl₃; 60MHz, δ ppm) 1.95 (s,3H), 4.25-4.70 (m,8H), 5.70 (m,1H), 6.25 (m,1H). Rf 0.9 (SiO₂, eluting with 10% methanol:90% dichloromethane; spot visualised with molybdenum blue spray reagent and with iodine vapour).

### d) 2-(Methacryloyloxyethyl)-2'-(trimethylammonium)ethyl phosphate inner salt (4).

The phospholane (3) (67.20g; 0.285 mol) was dissolved in 100 ml of dry acetonitrile, and placed in a heavy walled tissue culture bottle. The phospholane solution was then treated with a solution of anhydrous trimethylamine (25.74g; 0.436 mol) in dry acetonitrile (100ml). The vessel was then sealed, and placed in a water bath held at 50°C for 30 hours. The vessel was opened, and the solution brought to the boil. The solution was filtered whilst hot, and then set aside for crystallisation.

The product was collected by filtration, and most of the solvent removed by suction. The wet product was then washed thoroughly with anhydrous ether, then dried under reduced pressure, to give (4) as a white amorphous, hygroscopic solid (51.16g; 61%). Evaporation of the mother liquor gave a very viscous oil (20.00g; 23%), from which further product (4) crystallised on standing at -200°C. TLC (silica gel plates, eluting with methanol/dichloromethane (1:1 v/v)) showed one spot Rf 0.1, which was revealed with Dragendorff's reagent, Molybdenum blue spray reagent, and iodine vapour. IR(cm⁻¹ 1720, 1640, 1320, 1300, 1230, 1170, 970, 750.

NMR (D₂O; 60MHz; δ ppm) 2.0 (s,3H), 3.27 (s,9H) 3.60-4.50 (m, 8H), 5.80, (m, 1H) and 6.25 (m,1H).

| | | | | |
|---|---|---|---|---|
| CHN Found | C 42.98%, | H 7.88%, | N 4.42%, | P 10.51%. |
| CHN Theory | C 44.75%, | H 7.46%, | N 4.75%, | P 10.51%. |

### Reference Example 2:

### Synthesis of dimethyl-(2-methacryloyloxyethyl)-(1-(2-sulphopropyl))ammonium betaine inner salt

2-(Dimethylamino)ethylmethacrylate was vacuum distilled and then dissolved in 0.1M dichloromethane. To this solution was added an equimolar amount of propane sultone. The betaine slowly precipitated out of solution and was recovered by filtration and washed with cold dichloromethane. The reaction is shown in Reaction Scheme B.

### Reference Example 3

### Preparation of 1[4(4'-vinylbenzyloxy)butane]-2"-(trimethylammonium) ethyl phosphate inner salt

The synthesis is depicted in Reaction Scheme C.

### 4-Hydroxy-1-(4'-vinylbenzyloxy)butane (5)

Butanediol (40ml; 40.68g; 0.452mol) was stirred in a 100ml round bottomed flask, and treated portion wise with potassium butoxide (17.60g; 0.144mol). The initial reaction was exothermic. The reaction mixture was stirred for 1.5 hours at room temperature. The resulting cloudy solution was then treated with chloromethyl styrene (20.00g; 0.131 mol). The styrene formed an upper, pale green layer, (the colouration being due to the presence of inhibitor), whose color darkened considerably on the addition of 18-crown-6 (0.49g; 1.86x10³ mole). The flask was stoppered, protected from light, and stirred for 28 hours at room temperature. The mixture was then poured into water (120 ml) and extracted with dichloromethane (4x50ml). The combined organic extracts were dried (MgSO₄) and evaporated to give viscous yellow oil (932.7g). This oil was distilled from a small amount of CuCl to give a product showing some impurities on TLC. The oil was then chromatographed on silica gel, initially eluting with dichloromethane/petrol (1:1) to remove the impurities. The product was then eluted off the column with ethyl acetate/petrol (1:1). Evaporation of the solvent gave a colourless oil, which was distilled to give the desired styrylbutyl alcohol as a colourless oil b.pt. 150-152°/0.4mbar. Yield 18.70g; 69.2%.
NMR (60MHz: CDCl₃) 1.55 (m4H C-CH₂-C); 3.50 (m, 5H, 1H exch.; O-CH₂-, O-H), 4.45 (s,2H; Ar-CH₂-), 5.50 (dd, 2H, vinylic), 6.75 (dd, vinylic), 7.40 (m, 4H, Ar-H).
IR 3402, 2938, 2888, 1631, 1602, 1582, 1511, 1480, 1445, 1382, 1320, 1116, 1063, 920, 907, 827, 801, 716 and 667 cm⁻¹

### 4-(2-Oxo-1,2,3-dioxaphospholane-2-yloxy)-1-(4'-vinylbenzyloxy)butane (6)

4-Hydroxy-1-(4'-vinylbenzyloxy)butane (5) (10.03g; 48.69 mmol) and dried triethylamine (4.92g, 48.69 mmol) were dissolved in dry diethyl ether (150ml) and the resulting solution placed in a rigorously dried flask. The solution was cooled to -30°C and
2-chloro-2-oxo-1,3,2-dioxaphospholane (6.94g; 48.69 mmol) added dropwise over 30 minutes, the temperature being held at -30°C. The reaction mixture was then stirred for a further 2 hours, during which time the temperature was allowed to rise to 10°C. The mixture was filtered and the precipitate washed with dry ether. The filtrate was evaporated (20°C / 21mm) to give a cloudy oil. The residue was shaken with 50ml of dry ether and refiltered. Evaporation of the filtrate gave the product as a viscous yellow oil (13.73 g; 90.4%).

TLC (eluting with 10% methanol 90% dichloromethane) showed one major spot, which stained with acid molybdate reagent (Rf 0.61), IR (thin film) 3458, 2945, 2917, 2860, 1630, 602, 1581, 1475, 1419, 1363, 1283, 1103, 1032, 820, 842, 807, 800, 715, 610 and 421 cm⁻¹.

### 1-[4-(4'-vinylbenzyloxy)butane]-2"-(trimethylammonium) ethyl phosphate inner salt (7)

Trimethylamine (2.00g, 33.9 mmol) was distilled into a reaction vessel, and frozen with liquid nitrogen. A solution of the 4-(2-oxo-1,3,2-dioxaphospholane-2-yloxy)-1-(4'-vinylbenzyloxy)butane (6) (10.00g, 32.1 mmol) in anhydrous acetonitrile (40ml) was then added to the reaction vessel, which was then sealed and placed in a thermostatted water bath (50°C for 50 hours). The reaction vessel was then cooled to room temperature, opened, and the reaction mixture evaporated to about half its original volume (21 mm pressure). The concentrated solution was then stirred at room temperature, whilst anhydrous ether (200ml) was added dropwise to precipitate the product as a viscous oil. The mixture was then left for several hours at -10°C. The product was collected by decanting off the supernatant solid. TLC (eluting with methanol/dichloromethane 1:1) showed one major spot at Rf 0.0-0.1 which stained with both Dragendorffs reagent and acid molybdate.

### Reference Example 4

### Preparation of 2-(acryloyloxyethyl)-2'-(trimethylammonium) ethyl phosphate inner salt

The synthesis is essentially analogous to that described in Reference Example 1 and uses a synthetic strategy analogous to that shown in Reaction Scheme A.

### (a) 2-(2-Oxo-1,3,2-dioxaphospholan-2-yloxy)ethyl acrylate

2-Hydroxyethyl acrylate (11.5ml, 0.1M) and triethylamine (14.6 ml) in dry diethyl ether (250ml) were cooled to -25°C under nitrogen as a solution of 2-chloro-2-oxo-1,3,2-dioxaphospholane (14.3g) in dry diethyl ether was added over 20 minutes. The mixture was stirred for a further 1 hour at -20°C and then allowed to warm to 10°C over a further hour. The precipitate was filtered, washed with ethyl acetate (100ml) and the combined filtrate and washings evaporated under reduced pressure to give a pale yellow oil (21g).

¹H NMR (200MHz) d (CD₃CN) 6.4 (1H,dd), 6.2 (1H,dd), 5.9 (1H,dd), 4.0-3.6 (8H,complex) ppm.

### (b) 2-(Acryloyloxyethyl)-2'-(trimethylammonium)ethyl phosphate inner salt.

2-(2-Oxo-1,3,2-dioxaphospholan-2-yloxy) ethyl acrylate (21g,0.095M) in acetonitrile (50ml) was treated with a solution of triethylamine (12.1g) in acetonitrile (150ml) in a pressure reactor at 50°C for 17 hours. The mixture was cooled and some of the excess triethylamine removed by evaporation under reduced pressure.

The solid material was filtered under nitrogen, washed with acetonitrile (20ml) and diethylether (50ml) and then dried under reduced pressure to give a colourless oil (12.1g, 45%).

¹H NMR (200MHz) d (D₂O) 6.45 (1H,dd, J1.2 and 17.1 Hz), 6.25 (1H,dd,J1.2 and 10.25Hz), 6.02 (1H,dd, J1.23 and 10.25Hz), 4.4 (2H,m), 4.3 (2H, m), 4.2 (2H,m) 3.6(2H,m) and 3.2(9H,s) ppm.

### Reference Example 5

### Dodec-7-yn-1-ol Methacrylate

To dodec-7-yn-1-ol (25g) in dichloromethane (60ml) was added distilled triethylamine (14.1g). The mixture was cooled in an ice bath (0.5°C) and stirred as distilled methacryloyl chloride (16.2g) in dichloromethane (50ml) was added over 10 minutes. The temperature of the reaction was allowed to warm to ambient and the mixture stirred for two hours. Water (150ml) was added and the organic layer was removed and successively extracted with water (2 x 150ml) and saturated sodium bicarbonate solution (2 x 150ml), washed with brine (150ml) and dried over anhydrous sodium sulphate. The solvent was removed under reduced pressure to give a pale yellow oily liquid which was distilled under reduced pressure (0.18 mBar, 106-110°C) in the presence of copper (1) chloride to give dodec-7-yn-1-ol methacrylate, 17g, 50% yield.

¹H-NMR (200MHz, d, ppm, CDCl₃): 0.90 (t,3H), 1.45 (m,10H), 1.70 (m,2H), 1.95 (s,3H), 2.15 (m,6H), 4.15 (t,2H), 5.55 (s,1H), 6.10 (s,1H).

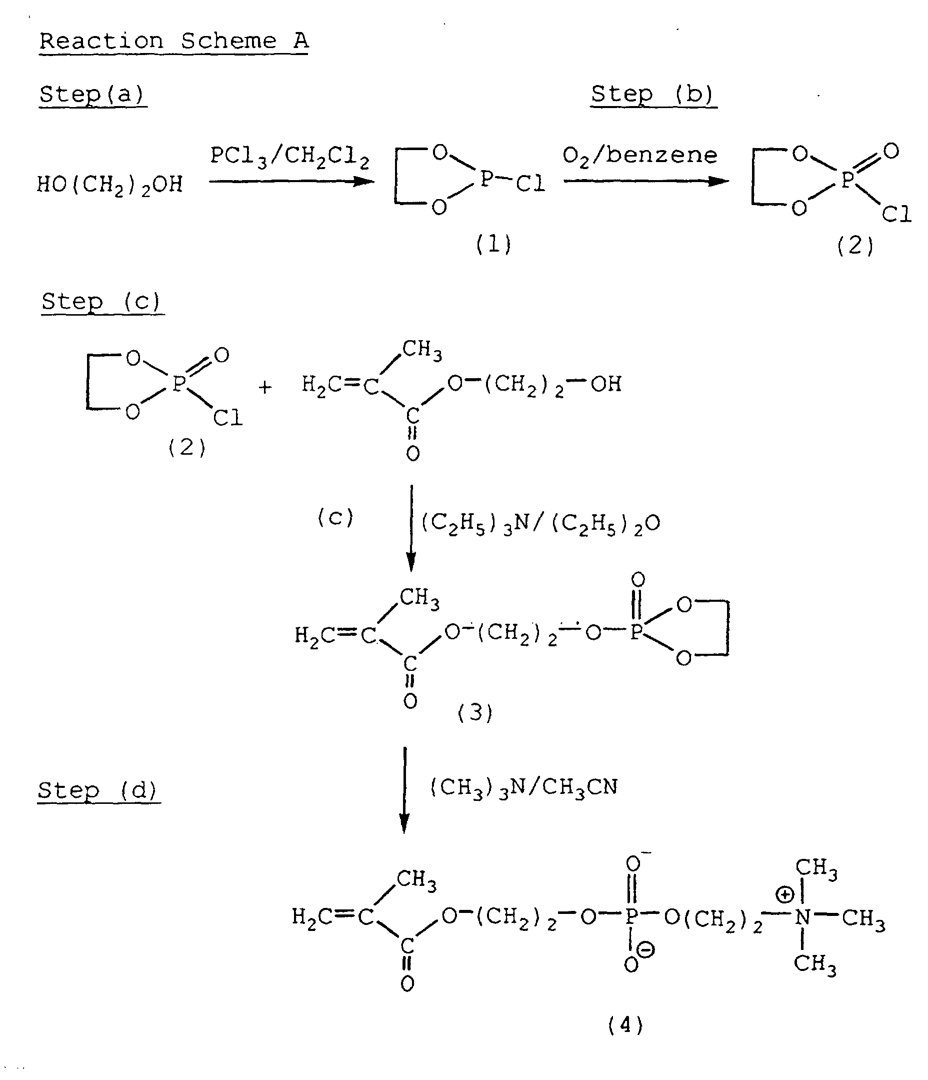

Steps (a) to (d) correspond with the steps in Reference Example 2.

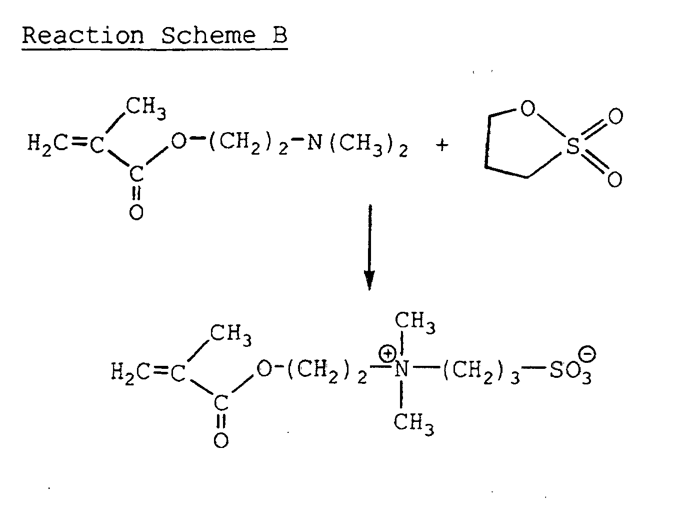

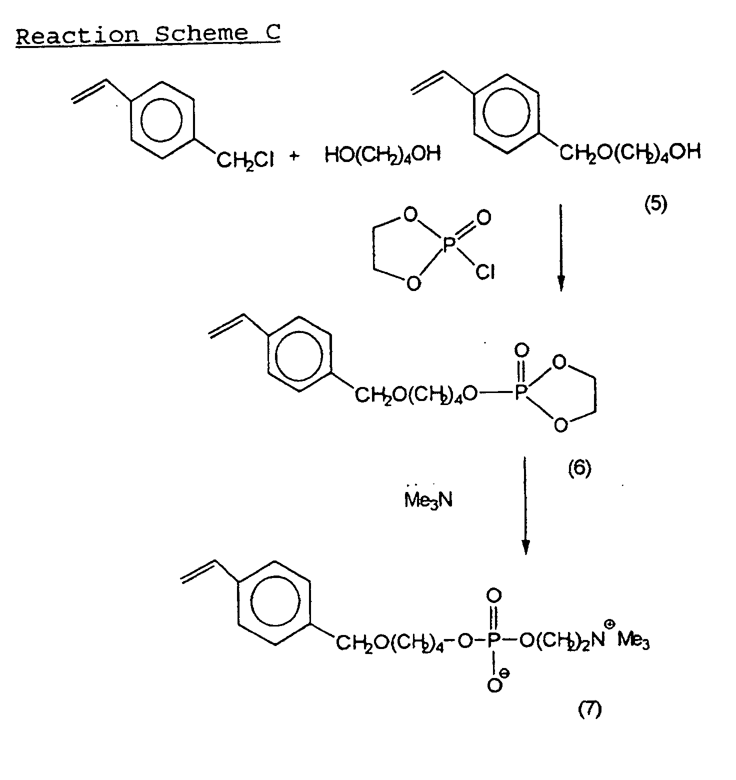

## Claims

1. A coating consisting of
a) a polymer obtainable by the radical polymerisation of monomers consisting of
i) a zwitterionic monomer of the general formula I
Y-B-X (I)
wherein B is a straight or branched alkylene, oxaalkylene or oligo-oxaalkylene chain optionally containing one or more fluorine atoms up to and including perfluorinated chains or, if X contains a carbon-carbon chain between B and the centre of permanent positive charge or if Y contains a terminal carbon atom bonded to B, a valence bond;
X is a zwitterionic group and
Y is an ethylenically unsaturated polymerisable group selected from 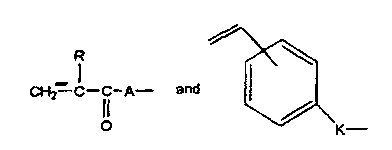 wherein:
R is hydrogen or a C₁-C₄ alkyl group;
A is -O- or -NR¹- wherein R¹ is hydrogen or a C₁₋C₄ alkyl group or R¹ is -B-X where B and X are as defined above; and
K is a group -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²-, (in which the groups R² are the same or different) -(CH₂)ₚO-, -(CH₂)ₚSO₃-, or, optionally in combination with B, a valence bond and p is from 1 to 12 and R² is hydrogen or a C₁-C₄ alkyl group; and
ii) a hydrophobic comonomer of the general formula
Y¹-Q (VI)
where Y¹ is an ethylenically unsaturated polymerisable group selected from 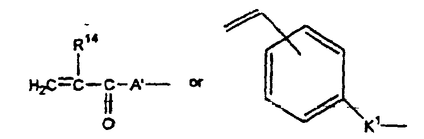 wherein R¹⁴ is hydrogen or C₁-C₄ alkyl,
A' is -O- or -NR¹⁵- where R¹⁵ is hydrogen or a C₁-C₄ alkyl group or R¹⁵ is a group Q;
K¹ is a group -(CH₂)ₗOC(O)-, -(CH₂)ₗC(O)O-, -(CH₂)ₗOC(O)O-, (CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (in which the groups R¹⁶ are the same or different), -(CH₂)ₗO-, -(CH₂)ₗSO₃-, a valence bond and l is from 1 to 12 and R¹⁶ is hydrogen or a C₁-C₄ alkyl group; and
Q is straight or branched alkyl, alkoxyalkyl or (oligo-alkoxy)alkyl chain containing 6 to 24 carbon atoms optionally containing one or more carbon-carbon double or triple bonds; and
b) a solvent consisting of alcohol in which the polymer is dispersed.

2. A coating according to claim 1 in which the alcohol is selected from methanol, ethanol and isopropanol (propan-2-ol).

3. A coating according to any preceding claim in which the polymer has a molecular weight in the range 2 x 10⁴ to 10⁶ (20,000 to 1 million)

4. A coating according to any preceding claim in which the zwitterionic monomer is a compound of general formula II 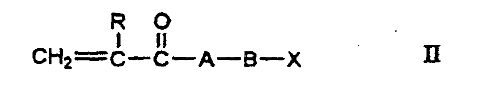 in which R is H or Me;
A is O;
B is alkylene of formula (CH₂)ₐ where a is in the range 1 to 12, and
X is as defined in claim 1.

5. A coating according to any preceding claim in which X is selected from groups IVB, IVC, IVD, IVE and IVF:- 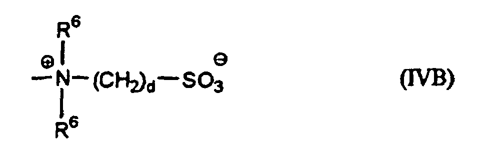 where the groups R⁶ are the same or different and each is hydrogen or C₁₋₄ alkyl and d is from 2 to 4; 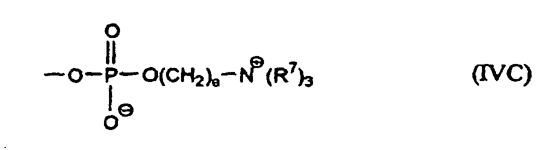 where the groups R⁷ are the same or different and each is hydrogen or C₁₋₄ alkyl, and e is from 1 to 4; 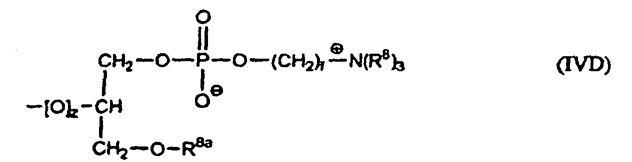 wherein the groups R⁸ are the same or different and each is hydrogen or C₁₋₄ alkyl, R^{8a} is hydrogen or a group -C(O)B¹R^{8b} where R^{8b} is hydrogen or methyl, B¹ is selected from the group consisting of a valence bond, and straight and branched alkylene, oxaalkylene and oligo-oxaalkalyene group, and f is from 1 to 4;
and
if B is other than a valence bond z is 1 and if B is a valence bond z is 0, if X is directly bonded to an oxygen or nitrogen atom and otherwise z is 1; 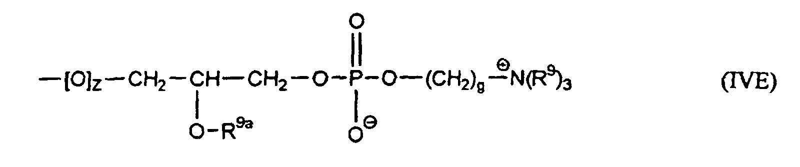 wherein the groups R⁹ are the same or different and each is hydrogen or C₁-C₄ alkyl, R^{9a} is a hydrogen or a group -C(O)B²R^{9b}, R^{9b} is hydrogen or methyl, B² is selected from the group consisting of a valence bond and straight and branched alkylene, oxaalkylene and oligo-oxaalkylene groups, and g is from 1 to 4; and
if B is other than a valence bond z is 1 and if B is a valence bond z is 0 if X is directly bonded to an oxygen or nitrogen atom and otherwise z is 1; 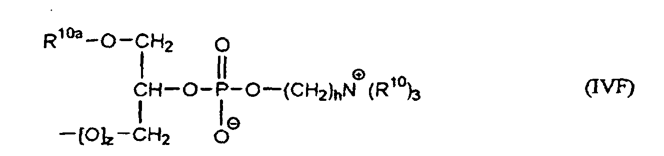 wherein the groups R¹⁰ are the same or different and each is hydrogen or C₁₋₄ alkyl, R^{10a} is hydrogen or a group -C(O)B³R^{10b} where R^{10b} is hydrogen or methyl, B³ is selected from the group consisting of a valence bond and straight and branched - alkylene, oxaalkylene or oligo-oxaalkylene groups, and h is from 1 to 4; and
if B is other than a valence bond z is 1 and if B is a valence bond z is 0 if X is directly bonded to the oxygen or nitrogen and otherwise z is 1.

6. A coating according to claim 5 in which X is a group of formula IVC, in which each R⁷ is the same and is C₁₋₄-alkyl and in which e is 2 or 3.

7. A coating according to claim 6 in which each R⁷ is methyl and e is 2.

8. A coating according to any preceding claim in which, in the hydrophobic comonomer, Q is an alkyl group of formula (CR¹⁷₂)ₘCR¹⁷₃ wherein the groups (CR¹⁷₂) are the same or different, and in each group (CR¹⁷₂) the groups R¹⁷ are the same or different and each group R¹⁷ is hydrogen or C₁₋₄ alkyl, and m is in the range 5 to 23.

9. A coating according to claim 8 in which the hydrophobic monomer is selected from n-dodecylmethacrylate, octadecylmethacrylate and hexadecylmethacrylate.

10. A coating process in which a coating according to any preceding claim is coated onto the surface of a hydrophobic substrate to form a coating of the polymer on the surface.

11. A coating process according to claim 10 in which the substrate is selected from polyethylene, polypropylene and polytetrafluoroethylene.

12. A coating process according to claim 10 or claim 11 in which the platelet activation of the substrate is reduced by the coating by at least 70%.

13. A coating process according to claim 12 in which the platelet activation of the substrate is reduced by the coating by at least 90%.

## Patentansprüche

1. Beschichtung bestehend aus
a) einem Polymer, das durch Radikalpolymerisation von Monomeren erhältlich ist, die bestehen aus
i) einem zwitterionischen Monomer der allgemeinen Formel I
Y-B-X (I),
worin B eine geradkettige oder verzweigte Alkylen-, Oxaalkylen- oder Oligo-Oxaalkylenkette, die gegebenenfalls ein oder mehrere Fluoratome bis zu und einschließlich von perfluorierten Ketten enthält, oder, falls X eine Kohlenstoff-Kohlenstoff-Kette zwischen B und dem Zentrum der permanenten positiven Ladung enthält oder falls Y ein terminales, an B gebundenes Kohlenstoffatom enthält, eine Valenzbindung ist;
X eine zwitterionische Gruppe ist; und
Y eine ethylenisch ungesättigte polymerisierbare Gruppe ist, die ausgewählt ist aus 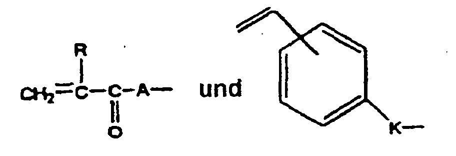 worin
R Wasserstoff oder eine C₁-C₄-Alkylgruppe ist;
A -O- oder -NR¹- ist, worin R¹ Wasserstoff oder eine C₁-C₄-Alkylgruppe ist oder R¹ -B-X ist, worin B und X wie vorstehend definiert sind; und
K eine Gruppe -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²- (worin die Gruppen R² gleich oder verschieden sind), -(CH₂)ₚO-, -(CH₂)ₚSO₃- ist oder, gegebenenfalls in Kombination mit B, eine Valenzbindung ist und p 1 bis 12 ist und R² Wasserstoff oder eine C₁-C₄-Alkylgruppe ist; und
ii) einem hydrophoben Comonomer der allgemeinen Formel
Y¹-Q (VI)
worin Y¹ eine ethylenisch ungesättigte polymerisierbare Gruppe ist, die ausgewählt ist aus 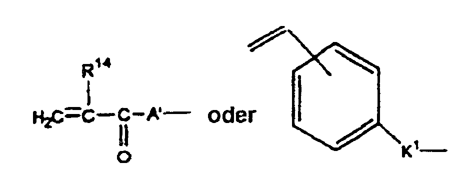 worin R¹⁴ Wasserstoff oder C₁-C₄-Alkyl ist,
A' -O- oder -NR¹⁵- ist, worin R¹⁵ Wasserstoff oder eine C₁-C₄-Alkylgruppe ist oder R¹⁵ eine Gruppe Q ist;
K¹ eine Gruppe -(CH₂)ₗOC(O)-, -(CH₂)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (worin die Gruppen R¹⁶ gleich oder verschieden sind), -(CH₂)ₗO-, -(CH₂)ₗSO₃- oder eine Valenzbindung ist und l 1 bis 12 ist und R¹⁶ Wasserstoff oder eine C₁-C₄-Alkylgruppe ist; und
Q eine geradkettige oder verzweigte Alkyl-, Alkoxyalkyl- oder (Oligoalkoxy)alkylkette ist, die 6 bis 24 Kohlenstoffatome enthält und die gegebenenfalls ein oder mehrere Kohlenstoff-Kohlenstoff-Doppeloder Dreifachbindungen enthält; und
b) einem Lösungsmittel, bestehend aus Alkohol, worin das Polymer dispergiert ist.

2. Beschichtung nach Anspruch 1, wobei der Alkohol aus Methanol, Ethanol und Isopropanol (Propan-2-ol) ausgewählt ist.

3. Beschichtung nach einem vorhergehenden Anspruch, wobei das Polymer ein Molekulargewicht im Bereich von 2x10⁴ bis 10⁶ (20.000 bis 1 Million) hat.

4. Beschichtung nach einem vorhergehenden Anspruch, wobei das zwitterionische Monomer eine Verbindung der allgemeinen Formel II 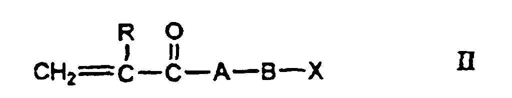 ist,
worin
R H oder Me ist;
A O ist;
B Alkylen der Formel (CH₂)ₐ ist, worin a im Bereich von 1 bis 12 liegt, und
X wie in Anspruch 1 definiert ist.

5. Beschichtung nach einem vorhergehenden Anspruch, worin X aus den Gruppen IVB, IVC, IVD, IVE und IVF ausgewählt ist 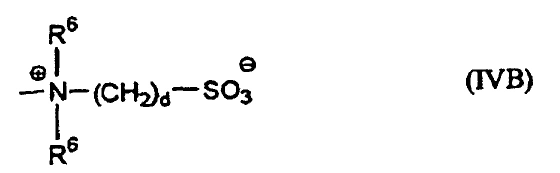 worin die Gruppen R⁶ gleich oder verschieden und jeweils Wasserstoff oder C₁-C₄-Alkyl sind und d 2 bis 4 ist; 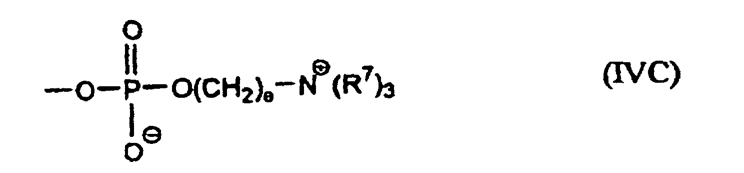 worin die Gruppen R⁷ gleich oder verschieden und jeweils Wasserstoff oder C₁-C₄-Alkyl sind und e 1 bis 4 ist; 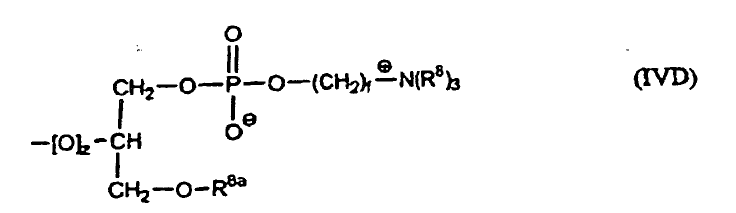 worin die Gruppen R⁸ gleich oder verschieden und jeweils Wasserstoff oder C₁-C₄-Alkyl sind, R^{8a} Wasserstoff oder eine Gruppe -C(O)B¹R^{8b} ist, worin R^{8b} Wasserstoff oder Methyl ist, B¹ aus der Gruppe ausgewählt ist, bestehend aus einer Valenzbindung und einer geradkettigen und verzweigten Alkylen-, Oxaalkylen-, und Oligo-Oxaalkylengruppe, und f 1 bis 4 ist;
und
falls B etwas anderes ist als eine Valenzbindung, z 1 ist, und falls B eine Valenzbindung ist, z 0 ist, falls X direkt an ein Sauerstoff- oder Stickstoffatom gebunden ist, und z andernfalls 1 ist; 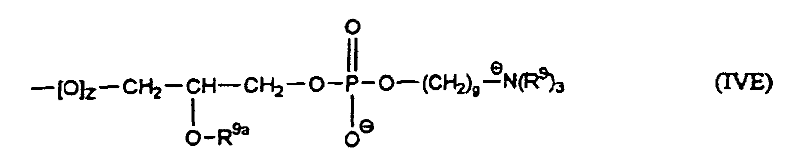 worin die Gruppe R⁹ gleich oder verschieden und jeweils Wasserstoff oder C₁-C₄-Alkyl ist, R^{9a} Wasserstoff oder eine Gruppe -C(O)B²R^{9b} ist, R^{9b} Wasserstoff oder Methyl ist, B² aus der Gruppe ausgewählt ist, bestehend aus einer Valenzbindung und geradkettigen und verzweigten Alkylen-, Oxaalkylen-, und Oligo-Oxaalkylengruppen, und g 1 bis 4 ist; und
falls B etwas anderes ist als eine Valenzbindung, z 1 ist, und falls B eine Valenzbindung ist, z 0 ist, falls X direkt an ein Sauerstoff- oder Stickstoffatom gebunden ist, und z andernfalls 1 ist, 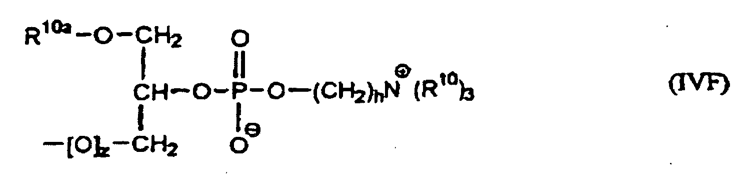 worin die Gruppen R¹⁰ gleich oder verschieden und jeweils Wasserstoff oder C₁-C₄-Alkyl sind, R^{10a} Wasserstoff oder eine Gruppe -C(O)B³R^{10b} ist, worin R^{10b} Wasserstoff oder Methyl ist, B³ aus der Gruppe ausgewählt ist, bestehend aus einer Valenzbindung und geradkettigen und verzweigten Alkylen-, Oxaalkylen-, oder Oligo-Oxaalkylengruppen, und h 1 bis 4 ist; und falls B etwas anderes ist als eine Valenzbindung, z 1 ist, und falls B eine Valenzbindung ist, z 0 ist, falls X direkt an den Sauerstoff oder Stickstoff gebunden ist, und z andernfalls 1 ist.

6. Beschichtung nach Anspruch 5, wobei X eine Gruppe der Formel IVC ist, worin R⁷ jeweils gleich und C₁-C₄-Alkyl ist und worin e 2 oder 3 ist.

7. Beschichtung nach Anspruch 6, wobei R⁷ jeweils Methyl ist und e 2 ist.

8. Beschichtung nach einem vorhergehenden Anspruch, wobei in dem hydrophoben Comonomer Q eine Alkylgruppe der Formel (CR¹⁷₂)ₘCR¹⁷₃ ist, worin die Gruppen (CR¹⁷₂) gleich oder verschieden sind und in jeder Gruppe (CR¹⁷₂) die Gruppen R¹⁷ gleich oder verschieden sind und die Gruppe R¹⁷ jeweils Wasserstoff oder C₁-C₄-Alkyl ist und m im Bereich von 5 bis 23 liegt.

9. Beschichtung nach Anspruch 8, worin das hydrophobe Monomer aus n-Dodecylmethacrylat, Octadecylmethacrylat und Hexadecylmethacrylat ausgewählt ist.

10. Beschichtungsverfahren, wobei eine Beschichtung nach einem vorhergehenden Anspruch auf die Oberfläche eines hydrophoben Substrats unter Bildung einer Beschichtung aus dem Polymer auf der Oberfläche aufgebracht wird.

11. Beschichtungsverfahren nach Anspruch 10, wobei das Substrat aus Polyethylen, Polypropylen und Polytetrafluorethylen ausgewählt ist.

12. Beschichtungsverfahren nach Anspruch 10 oder Anspruch 11, wobei die Plättchenaktivierung des Substrats durch die Beschichtung um mindestens 70 % reduziert wird.

13. Beschichtungsverfahren nach Anspruch 17, wobei die Plättchenaktivierung des Substrats durch die Beschichtung um mindestens 90 % reduziert wird.

## Revendications

1. Revêtement consistant en
a) un polymère que l'on peut obtenir par polymérisation radicalaire de monomères constitués par
i) un monomère zwittérionique de formule générale I
Y-B-X (I)
dans laquelle B est une chaîne alkylène, oxaalkylène ou oligooxaalkylène droite ou ramifiée, contenant éventuellement un ou plusieurs atomes de fluor allant y compris jusqu'aux chaînes perfluorées, ou une liaison de valence, si X contient une chaîne carbone-carbone entre B et le centre de la charge positive permanente ou si Y contient un atome de carbone terminal lié à B ;
X est un groupe zwittérionique et
Y est un groupe polymérisable éthyléniquement insaturé choisi parmi 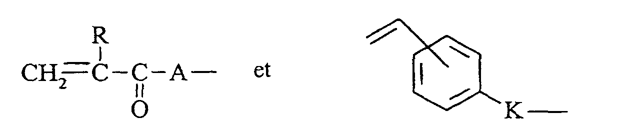 dans lesquels :
R est un atome d'hydrogène ou un groupe alkyle en C₁-C₄ ;
A est -O- ou -NR¹- où R¹ est un atome d'hydrogène ou un groupe alkyle en C₁-C₄ ou R¹ est -B-X, où B et X sont tels que définis ci-dessus ; et
K est un groupe -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²- (dans lesquels les groupes R² sont identiques ou différents), -(CH₂)ₚO-, -(CH₂)ₚSO₃- ou, éventuellement en combinaison avec B, une liaison de valence et p est compris entre 1 et 12 et R² est un atome d'hydrogène ou un groupe alkyle en C₁-C₄ ; et
ii) un comonomère hydrophobe de formule générale
Y¹-Q (VI)
dans laquelle Y' est un groupe polymérisable éthyléniquement insaturé choisi parmi 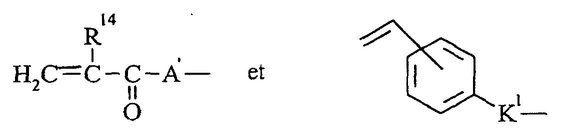 dans lesquels R¹⁴ est un atome d'hydrogène ou un groupe alkyle en C₁-C₄ ;
A' est -O- ou -NR¹⁵- où R¹⁵ est un atome d'hydrogène ou un groupe alkyle en C₁-C₄ ou R¹⁵ est un groupe Q ;
K' est un groupe -(CH₂)ₗOC(O)-, -(CH₂)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR1⁶- (dans lesquels les groupes R¹⁶ sont identiques ou différents), -(CH₂)ₗO-, -(CH₂)ₗSO₃-, une liaison de valence et 1 est compris entre 1 et 12 et R¹⁶ est un atome d'hydrogène ou un groupe alkyle en C₁-C₄ ; et
Q est une chaîne alkyle, alcoxyalkyle ou oligoalcoxyalkyle linéaire ou ramifiée contenant de 6 à 24 atomes de carbone, contenant éventuellement une ou plusieurs doubles ou triples liaisons carbone-carbone ; et
b) un solvant constitué par un alcool dans lequel le polymère est dispersé.

2. Revêtement selon la revendication 1, dans lequel l'alcool est choisi parmi le méthanol, l'éthanol et l'isopropanol (propan-2-ol).

3. Revêtement selon l'une quelconque des revendications précédentes, dans lequel le polymère présente une masse moléculaire dans l'intervalle de 2 x 10⁴ à 10⁶ (20 000 à 1 million).

4. Revêtement selon l'une quelconque des revendications précédentes, dans lequel le monomère zwittérionique est un composé de formule générale II 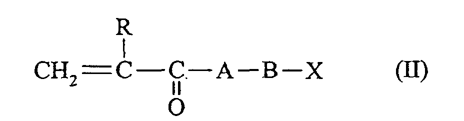 dans laquelle R est H ou Me ;
A est O ;
B est un groupe alkylène de formule (CH₂)ₐ dans laquelle a est dans l'intervalle de 1 à 12 et
X est tel que défini dans la revendication 1.

5. Revêtement selon l'une quelconque des revendications précédentes, dans lequel X est choisi parmi les groupes IVB, IVC, IVD, IVE et IVF : 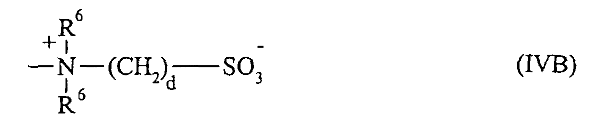 dans lequel les groupes R⁶ sont identiques ou différents et chacun est un atome d'hydrogène ou un groupe alkyle en C₁₋₄ et d est compris entre 2 et 4 ; 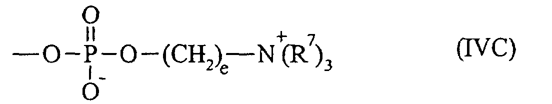 dans lequel les groupes R⁷ sont identiques ou différents et chacun est un atome d'hydrogène ou un groupe alkyle en C₁₋₄ et e est compris entre 1 et 4 ; 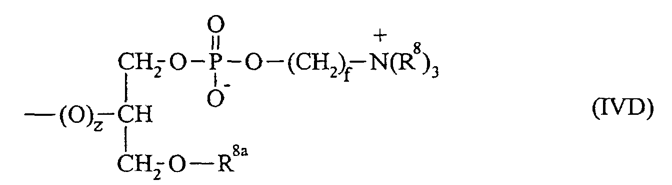 dans lequel les groupes R⁸ sont identiques ou différents et chacun est un atome d'hydrogène ou un groupe alkyle en C₁₋₄, R^{8a} est un atome d'hydrogène ou un groupe -C(O)B¹R^{8b} dans lequel R^{8b} est un atome d'hydrogène ou un groupe méthyle, B' est choisi dans le groupe constitué par une liaison de valence et un groupe alkylène, oxaalkylène et oligooxaalkylène droit et ramifié et f est compris entre 1 et 4 ; et
si B est différent d'une liaison de valence, z est égal à 1 et si B est une liaison de valence, z est égal à 0, si X est directement lié à un atome d'oxygène ou d'azote, et dans les autres cas z est égal à 1 ; 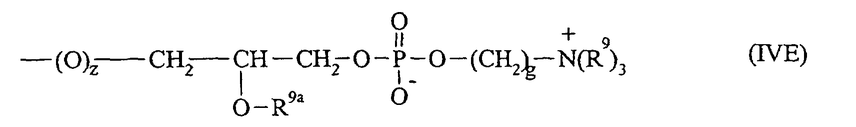 dans lequel les groupes R⁹ sont identiques ou différents et chacun est un atome d'hydrogène ou un groupe alkyle en C₁-C₄, R^{9a} est un atome d'hydrogène ou un groupe -C(O)B²R^{9b}, R^{9b} est un atome d'hydrogène ou un groupe méthyle, B² est choisi dans le groupe constitué par une liaison de valence et les groupes alkylène, oxaalkylène et oligooxaalkylène droits et ramifiés et g est compris entre 1 et 4 ; et
si B est différent d'une liaison de valence, z est égal à 1 et si B est une liaison de valence, z est égal à 0, si X est directement lié à un atome d'oxygène ou d'azote, et dans les autres cas z est égal à 1 ; 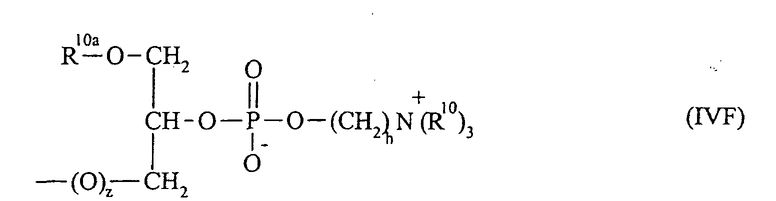 dans lequel les groupes R¹⁰ sont identiques ou différents et chacun est un atome d'hydrogène ou un groupe alkyle en C₁₋₄, R^{10a} est un atome d'hydrogène ou un groupe - C(O)B³R^{10b} dans lequel R^{10b} est un atome d'hydrogène ou un groupe méthyle, B³ est choisi dans le groupe constitué par une liaison de valence et les groupes alkylène, oxaalkylène ou oligooxaalkylène droits et ramifiés et h est compris entre 1 et 4 ; et
si B est différent d'une liaison de valence, z est égal à 1 et si B est une liaison de valence, z est égal à 0, si X est directement lié à l'oxygène ou à l'azote, et dans les autres cas z est égal à 1.

6. Revêtement selon la revendication 5, dans lequel X est un groupe de formule IVC, dans laquelle chaque R⁷ est identique et est un groupe alkyle en C₁₋₄ et dans laquelle e est 2 ou 3.

7. Revêtement selon la revendication 6, dans lequel chaque R⁷ est un groupe méthyle et e est 2.

8. Revêtement selon l'une quelconque des revendications précédentes, dans lequel, dans le comonomère hydrophobe, Q est un groupe alkyle de formule (CR¹⁷₂)ₘCR¹⁷₃, dans laquelle les groupes (CR¹⁷₂) sont identiques ou différents et dans chaque groupe (CR¹⁷₂), les groupes R¹⁷ sont identiques ou différents et chaque groupe R¹⁷ est un atome d'hydrogène ou un groupe alkyle en C₁₋₄ et m est dans l'intervalle de 5 à 23.

9. Revêtement selon la revendication 8, dans lequel le monomère hydrophobe est choisi parmi le méthacrylate de n-dodécyle, le méthacrylate d'octadécyle et le méthacrylate d'hexadécyle.

10. Procédé de revêtement dans lequel on dépose un revêtement selon l'une quelconque des revendications précédentes sur la surface d'un substrat hydrophobe afin de former un revêtement du polymère sur la surface.

11. Procédé de revêtement selon la revendication 10, dans lequel le substrat est choisi parmi le polyéthylène, le polypropylène et le polytétrafluoroéthylène.

12. Procédé de revêtement selon la revendication 10 ou la revendication 11, dans lequel l'activation du substrat par les plaquettes est réduite d'au moins 70% par le revêtement.

13. Procédé de revêtement selon la revendication 12, dans lequel l'activation du substrat par les plaquettes est réduite d'au moins 90% par le revêtement.
